# EUROPEAN PATENT APPLICATION

(11) **EP 4 838 831 A1**
(43) Date of publication of application: **11.11.2026**
(21) Application number: 24915725.6
(22) Date of filing: 02.01.2024
(51) Int. Cl.: H04L 9/08, H04L 9/30, H04L 9/32, H04L 9/06

(54) **APPARATUS AND METHOD FOR MINIMIZING QUANTUM INFORMATION TRANSMISSION AMOUNT AND RESOURCE USAGE IN ARBITRATOR-BASED QUANTUM SIGNATURE SCHEME**

(71) Applicant: LG Electronics Inc., Yeongdeungpo-gu Seoul 07336 (KR)
(72) Inventor: AHN, Byungkyu, Seoul 06772 (KR); LEE, Sangrim, Seoul 06772 (KR); LEE, Hojae, Seoul 06772 (KR); KIM, Jayeong, Seoul 06772 (KR); LEE, Jonghyun, Seoul 06772 (KR); PARK, Jooyoun, Seoul 06772 (KR)
(74) Representative: Plasseraud IP
(86) International application number: PCT/KR2024/000017
(87) International publication number: WO 2025/146833

(57) **Abstract**

According to various embodiments of the present disclosure, there is provided a method of operating a second node in a communication system, the method comprising receiving, from a first node, a second quantum signature based on a first quantum message and the first quantum message, wherein signature information related to the first quantum message is divided into a first quantum signature and the second quantum signature, and the first quantum signature is transmitted from the first node to a third node; transmitting, to the third node, a first message encrypted based on the second quantum signature and the first quantum message using a secret symmetric key shared with the third node; receiving, from the third node, a second message based on the first quantum signature, the second quantum signature, and the first quantum message; and determining whether the first quantum message is forged based on the second message.

## Description

### [Technical Field]

The present disclosure relates to a device and method for minimizing an amount of quantum information transmitted and resource usage in an arbitrator-based quantum signature scheme. Specifically, the present disclosure relates to a device and method for an arbitrator-based quantum signature scheme using the inherent properties of quantum. More specifically, the present disclosure relates to a device and method capable of minimizing an amount of quantum information transmitted and resource usage between entities exchanging information during a signing process by varying a transmission path for each component of signature information transmitted in an arbitrator-based quantum signature scheme among quantum signature schemes for non-repudiation, authentication, and forgery prevention of message information transmitted between a sender and a receiver.

### [Background Art]

(1) In existing arbitrator-based signature schemes, since signature information generated undergoes a channel pass three times, it occupies the largest proportion of a total amount of transmitted information in a signature process. The signature information includes |***Mₐ***〉, which is a result of Bell state measurement, and |***R***〉, which is a transformed state of message qubits, and |***Mₐ***〉 occupies the largest proportion.
   Since quantum signature information generated by Alice passes through a quantum channel of Alice → Bob → arbitrator → Bob three times, it occupies the largest amount of transmitted information among all transmitted information. In particular, since |***Mₐ***〉 among the components constituting the signature information is a Bell state, if N messages are transmitted through the signature scheme, it occupies a transmission volume of 2N qubits. Therefore, it occupies 2/3 of the total transmission volume of 3N qubits for the signature information. Considering that encryption and decryption are performed every time to prevent exposure of all information disclosed through the channel in a quantum signature, a reduction in the amount of transmitted information can significantly improve computational load and throughput. Furthermore, since there is a possibility that an attacker could analyze symmetric key information by utilizing combinations of disclosed information to carry out attacks, such as forgery or repudiation, it is desirable to minimize the amount of transmitted information to reduce this risk as well.
(2) It is not easy to generate multi-photon entangled states, such as the GHZ state (there are difficulties in terms of economy, device, and implementation).
   Compared to single photon or bell state, which is commonly used in existing quantum information transmission, the GHZ state involves a correlation between three or more multi-photons. Therefore, using it for quantum information processing can bring many advantages, but it still has problems such as high implementation difficulty, complexity of device configuration, and high economic costs for production.
(3) In the existing arbitrator-based quantum signature scheme, the amount of transmitted qubit information that shall be exchanged between three parties consisting of a sender, a receiver, and an arbitrator is very large, leading to problems of large amounts of information transmission and computation, and an increased possibility of exposure of public information.

In order to transmit a message of N qubits, the existing signature scheme requires more than 10 times the amount of quantum information transmission. In addition, to prevent the exposure each time transmitting information, a process of encryption using a public key and a quantum one-time pad algorithm is required, and a receiving side also requires a process of returning information to its original state before encryption using a public key of a receiving unit and a decryption algorithm, which results in a problem where a large amount of computation is required for information processing. Furthermore, as the amount of public information transmitted through the channel at each step increases, there is a possibility that an attacker may infer key information that he/she need by using combinations of various public information. Therefore, it is necessary to minimize the amount of public information that shall be exchanged during the signature process.

### [Disclosure]

### [Technical Problem]

To solve the above-described and other problems, the present disclosure provides a device and method for minimizing an amount of quantum information transmitted and resource usage in an arbitrator-based quantum signature scheme.

The present disclosure relates to a device and method for an arbitrator-based quantum signature scheme using the inherent properties of quantum. More specifically, the present disclosure provides a device and method capable of minimizing an amount of quantum information transmitted and resource usage between entities exchanging information during a signing process by varying a transmission path for each component of signature information transmitted in an arbitrator-based quantum signature scheme among quantum signature schemes for non-repudiation, authentication, and forgery prevention of message information transmitted between a sender and a receiver.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

According to various embodiments of the present disclosure, there is provided a method of operating a second node in a communication system.

The method comprises receiving, from a first node, a second quantum signature based on a first quantum message and the first quantum message, wherein signature information related to the first quantum message is divided into a first quantum signature and the second quantum signature, and the first quantum signature is transmitted from the first node to a third node; transmitting, to the third node, a first message encrypted based on the second quantum signature and the first quantum message using a secret symmetric key shared with the third node; receiving, from the third node, a second message based on the first quantum signature, the second quantum signature, and the first quantum message; and determining whether the first quantum message is forged based on the second message.

According to various embodiments of the present disclosure, there is provided a method of operating a third node in a communication system, the method comprising receiving, from a first node, a first quantum signature based on a quantum message, wherein signature information related to the quantum message is divided into the first quantum signature and a second quantum signature, and the second quantum signature is transmitted from the first node to a second node; receiving, from the second node, a first message encrypted based on the second quantum signature and a first quantum message using a secret symmetric key shared with the second node; and transmitting, to the second node, a second message based on the first quantum signature, the second quantum signature, and the first quantum message. Based on the second message, it is determined whether the first quantum message is forged.

According to various embodiments of the present disclosure, there is provided a second node in a communication system, the second node comprising a transceiver; at least one processor; and at least one memory operably connectable to the at least one processor and storing instructions performing operations based on being executed by the at least one processor. The operations comprise all steps of a method of operating the second node according to various embodiments of the present disclosure.

According to various embodiments of the present disclosure, there is provided a third node in a communication system, the third node comprising a transceiver; at least one processor; and at least one memory operably connectable to the at least one processor and storing instructions performing operations based on being executed by the at least one processor. The operations comprise all steps of a method of operating the third node according to various embodiments of the present disclosure.

According to various embodiments of the present disclosure, there is provided a control device controlling a second node in a communication system, the control device comprising at least one processor; and at least one memory operably connected to the at least one processor. The at least one memory stores instructions performing operations based on being executed by the at least one processor, and the operations comprise all steps of a method of operating the second node according to various embodiments of the present disclosure.

According to various embodiments of the present disclosure, there is provided a control device controlling a third node in a communication system, the control device comprising at least one processor; and at least one memory operably connected to the at least one processor. The at least one memory stores instructions performing operations based on being executed by the at least one processor, and the operations comprise all steps of a method of operating the third node according to various embodiments of the present disclosure.

According to various embodiments of the present disclosure, there are provided one or more non-transitory computer readable mediums storing one or more instructions. The one or more instructions perform operations based on being executed by one or more processors, and the operations comprise all steps of a method of operating the second node according to various embodiments of the present disclosure.

According to various embodiments of the present disclosure, there are provided one or more non-transitory computer readable mediums storing one or more instructions. The one or more instructions perform operations based on being executed by one or more processors, and the operations comprise all steps of a method of operating the third node according to various embodiments of the present disclosure.

### [Advantageous Effects]

To solve the above-described and other problems, the present disclosure can provide a device and method for minimizing an amount of quantum information transmitted and resource usage in an arbitrator-based quantum signature scheme.

The present disclosure relates to a device and method for an arbitrator-based quantum signature scheme using the inherent properties of quantum. More specifically, the present disclosure can provide a device and method capable of minimizing an amount of quantum information transmitted and resource usage between entities exchanging information during a signing process by varying a transmission path for each component of signature information transmitted in an arbitrator-based quantum signature scheme among quantum signature schemes for non-repudiation, authentication, and forgery prevention of message information transmitted between a sender and a receiver.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates an example of physical channels and general signal transmission used for the 3GPP system.
FIG. 2 illustrates system architecture of new generation radio access network (NG-RAN).
FIG. 3 illustrates functional split between NG-RAN and 5GC.
FIG. 4 illustrates an example of 5G usage scenario.
FIG. 5 illustrates an example of a communication structure providable in a 6G system.
FIG. 6 schematically illustrates an example of a structure of a perceptron.
FIG. 7 schematically illustrates an example of a structure of a multilayer perceptron.
FIG. 8 schematically illustrates an example of a deep neural network.
FIG. 9 schematically illustrates an example of a convolutional neural network.
FIG. 10 schematically illustrates an example of a filter operation of a convolutional neural network.
FIG. 11 schematically illustrates an example of a neural network structure in which a circular loop exists.
FIG. 12 schematically illustrates an example of an operation structure of a recurrent neural network.
FIG. 13 illustrates an example of an electromagnetic spectrum.
FIG. 14 illustrates an example of THz communication application.
FIG. 15 illustrates an example of an electronic device-based THz wireless communication transceiver.
FIG. 16 illustrates an example of a method of generating an optical device-based THz signal.
FIG. 17 illustrates an example of an optical device-based THz wireless communication transceiver.
FIG. 18 illustrates a structure of a photonic source-based transmitter.
FIG. 19 illustrates a structure of an optical modulator.
FIG. 20 illustrates an example of an existing direct signature scheme in a system applicable to the present disclosure.
FIG. 21 illustrates an example of an existing arbitrator-based signature scheme in a system applicable to the present disclosure.
FIG. 22 illustrates an example of an arbitrator-based quantum signature scheme using an existing GHZ state in a system applicable to the present disclosure.
FIG. 23 illustrates an example of an arbitrator-based quantum signature scheme using an existing Bell state in a system applicable to the present disclosure.
FIG. 24 illustrates an initial step of an arbitrator-based quantum signature scheme in a system applicable to the present disclosure.
FIG. 25 illustrates an example of an arbitrator-based quantum signature scheme using a GHZ state in a system applicable to the present disclosure.
FIG. 26 illustrates an example of an arbitrator-based quantum signature scheme using a Bell state in a system applicable to the present disclosure.
FIG. 27 illustrates a flowchart of an arbitrator-based quantum signature scheme using a GHZ state in a system applicable to the present disclosure.
FIG. 28 illustrates a flowchart of an arbitrator-based quantum signature scheme using a Bell state in a system applicable to the present disclosure.
FIG. 29 illustrates an example of an operation process of a second node in a system applicable to the present disclosure.
FIG. 30 illustrates an example of an operation process of a third node in a system applicable to the present disclosure.
FIG. 31 illustrates a communication system applied to various embodiments of the present disclosure.
FIG. 32 illustrates a wireless device applicable to various embodiments of the present disclosure.
FIG. 33 illustrates another example of a wireless device applicable to various embodiments of the present disclosure.
FIG. 34 illustrates a signal processing circuit for a transmission signal.
FIG. 35 illustrates another example of a wireless device applied to various embodiments of the present disclosure.
FIG. 36 illustrates a hand-held device applied to various embodiments of the present disclosure.
FIG. 37 illustrates a vehicle or an autonomous vehicle applied to various embodiments of the present disclosure.
FIG. 38 illustrates a vehicle applied to various embodiments of the present disclosure.
FIG. 39 illustrates an XR device applied to various embodiments of the present disclosure.
FIG. 40 illustrates a robot applied to various embodiments of the present disclosure.
FIG. 41 illustrates an AI device applied to various embodiments of the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro. 3GPP 6G may be an evolved version of 3GPP NR.

For clarity in the description, the following description will mostly focus on 3GPP communication system (e.g. LTE-A or 5G NR). However, technical features according to an embodiment of the present disclosure will not be limited only to this. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR/6G may be collectively referred to as the 3GPP system. For terms and techniques not specifically described among terms and techniques used in the present disclosure, reference may be made to a wireless communication standard document published before the present disclosure is filed. For example, the following document may be referred to.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

### Physical Channel and Frame Structure

### Physical Channel and General Signal Transmission

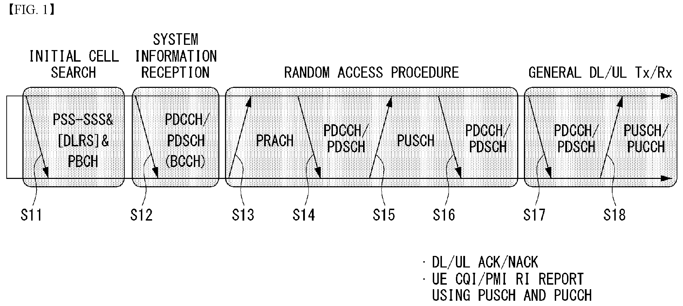

FIG. 1 illustrates an example of physical channels and general signal transmission used for the 3GPP system.

In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., via the PUSCH and/or PUCCH.

### Structure of Uplink and Downlink Channels

### Downlink Channel Structure

A base station transmits a related signal to a UE via a downlink channel to be described later, and the UE receives the related signal from the base station via the downlink channel to be described later.

### (1) Physical Downlink Shared Channel (PDSCH)

A PDSCH carries downlink data (e.g., DL-shared channel transport block, DL-SCH TB) and is applied with a modulation method such as quadrature phase shift keying (QPSK), 16 quadrature amplitude modulation (QAM), 64 QAM, and 256 QAM. A codeword is generated by encoding TB. The PDSCH may carry multiple codewords. Scrambling and modulation mapping are performed for each codeword, and modulation symbols generated from each codeword are mapped to one or more layers (layer mapping). Each layer is mapped to a resource together with a demodulation reference signal (DMRS) to generate an OFDM symbol signal, and is transmitted through a corresponding antenna port.

### (2) Physical Downlink Control Channel (PDCCH)

A PDCCH carries downlink control information (DCI) and is applied with a QPSK modulation method, etc. One PDCCH consists of 1, 2, 4, 8, or 16 control channel elements (CCEs) based on an aggregation level (AL). One CCE consists of 6 resource element groups (REGs). One REG is defined by one OFDM symbol and one (P)RB.

The UE performs decoding (aka, blind decoding) on a set of PDCCH candidates to acquire DCI transmitted via the PDCCH. The set of PDCCH candidates decoded by the UE is defined as a PDCCH search space set. The search space set may be a common search space or a UE-specific search space. The UE may acquire DCI by monitoring PDCCH candidates in one or more search space sets configured by MIB or higher layer signaling.

### Uplink Channel Structure

A UE transmits a related signal to a base station via an uplink channel to be described later, and the base station receives the related signal from the UE via the uplink channel to be described later.

### (1) Physical Uplink Shared Channel (PUSCH)

A PUSCH carries uplink data (e.g., UL-shared channel transport block, UL-SCH TB) and/or uplink control information (UCI) and is transmitted based on a CP-OFDM (Cyclic Prefix-Orthogonal Frequency Division Multiplexing) waveform, DFT-s-OFDM (Discrete Fourier Transform-spread-Orthogonal Frequency Division Multiplexing) waveform, or the like. When the PUSCH is transmitted based on the DFT-s-OFDM waveform, the UE transmits the PUSCH by applying a transform precoding. For example, if the transform precoding is not possible (e.g., transform precoding is disabled), the UE may transmit the PUSCH based on the CP-OFDM waveform, and if the transform precoding is possible (e.g., transform precoding is enabled), the UE may transmit the PUSCH based on the CP-OFDM waveform or the DFT-s-OFDM waveform. The PUSCH transmission may be dynamically scheduled by an UL grant within DCI, or may be semi-statically scheduled based on high layer (e.g., RRC) signaling (and/or layer 1 (L1) signaling (e.g., PDCCH)) (configured grant). The PUSCH transmission may be performed based on a codebook or a non-codebook.

### (2) Physical Uplink Control Channel (PUCCH)

A PUCCH carries uplink control information, HARQ-ACK, and/or scheduling request (SR), and may be divided into multiple PUCCHs based on a PUCCH transmission length.

New radio access technology (RAT, NR) is described below.

As more and more communication devices require larger communication capacity, there is a need for enhanced mobile broadband communication compared to the existing radio access technology (RAT). Massive machine type communications (MTCs) which provide various services anytime and anywhere by connecting many devices and objects are also one of the major issues to be considered in next-generation communications. In addition, a communication system design considering a service/UE sensitive to reliability and latency is also being discussed. As above, the introduction of next generation radio access technology considering enhanced mobile broadband communication, massive MTC, ultra-reliable and low latency communication (URLLC), etc. is discussed, and the technology is called new RAT or NR for convenience in various embodiments of the present disclosure.

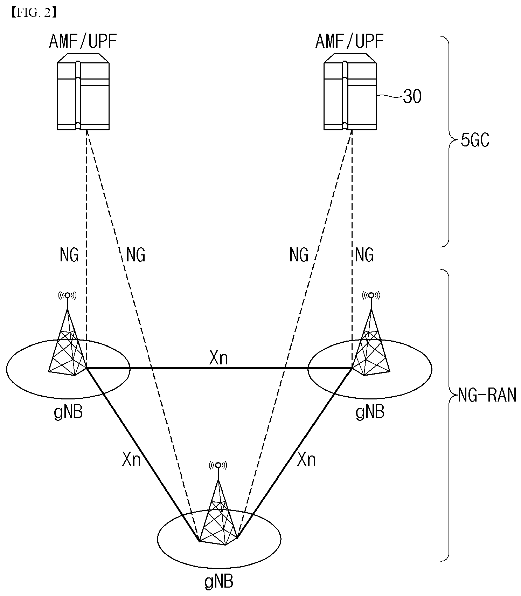

FIG. 2 illustrates system architecture of new generation radio access network (NG-RAN).

Referring to FIG. 2, the NG-RAN may include gNB and/or eNB providing user plane and control plane protocol terminations toward the UE. FIG. 2 illustrates an example where the NG-RAN includes only the gNB. The gNB and the eNB are interconnected via Xn interface. The gNB and the eNB are connected to the 5G core network (5GC) via NG interface. More specifically, the gNB and the eNB are connected to an access and mobility management function (AMF) via NG-C interface and connected to a user plane function (UPF) via NG-U interface.

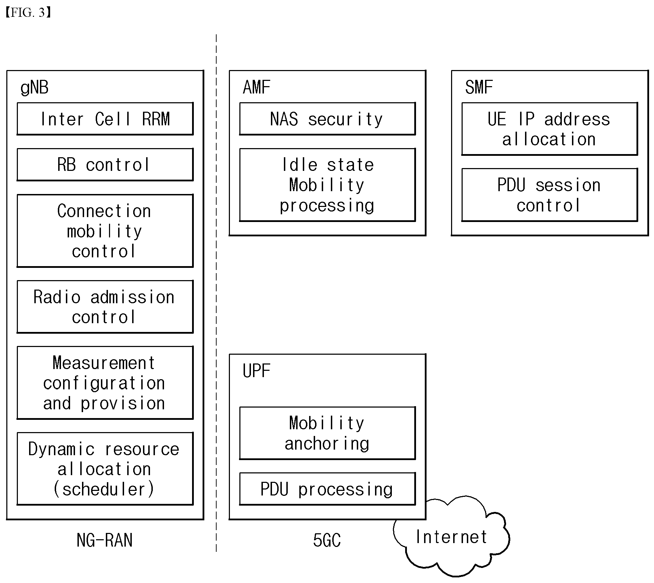

FIG. 3 illustrates functional split between NG-RAN and 5GC.

Referring to FIG. 3, the gNB may provide functions including Inter Cell RRM, RB control, connection mobility control, radio admission control, measurement configuration and provision, dynamic resource allocation, etc. The AMF may provide functions including non-access stratum (NAS) security, idle state mobility processing, etc. The UPF may provide functions including mobility anchoring, protocol data unit (PDU) processing, etc. The session management function (SMF) may provide functions including UE IP address allocation, PDU session control, etc.

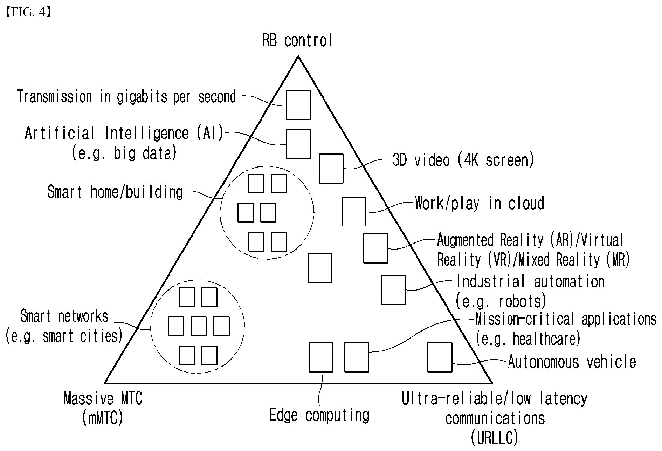

FIG. 4 illustrates an example of 5G usage scenario.

The 5G usage scenario illustrated in FIG. 4 is merely an example, and technical features according to various embodiments of the present disclosure can be applied to other 5G usage scenarios that are not illustrated in FIG. 4.

Referring to FIG. 4, three major requirement areas of 5G include (1) an enhanced mobile broadband (eMBB) area, (2) a massive machine type communication (mMTC) area and (3) an ultra-reliable and low latency communications (URLLC) area. Some use cases may require multiple areas for optimization, and other use case may focus only on one key performance indicator (KPI). 5G intends to support such diverse use cases in a flexible and reliable way.

eMBB focuses on across-the-board enhancements to the data rate, latency, user density, capacity and coverage of mobile broadband access. eMBB targets throughput of about 10Gbps. eMBB goes far beyond basic mobile Internet access and covers rich interactive work, media and entertainment applications in the cloud or augmented reality. Data will be one of the key drivers for 5G and in new parts of this system we may for the first time see no dedicated voice service in the 5G era. In 5G, voice is expected to be handled as an application, simply using the data connectivity provided by the communication system. The main drivers for the increased traffic volume include an increase in size of content and an increase in the number of applications requiring high data transfer rates. Streaming service (audio and video), interactive video and mobile Internet connectivity will continue to be used more broadly as more devices connect to the Internet. Many of these applications require always-on connectivity to push real time information and notifications to the users. Cloud storage and applications are rapidly increasing for mobile communication platforms. This is applicable for both work and entertainment. Cloud storage is one particular use case driving the growth of uplink data transfer rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality for entertainment and information retrieval. The augmented reality requires very low latencies and significant instant data volumes.

mMTC is designed to enable communication between devices that are low-cost, massive in number and battery-driven, and is intended to support applications such as smart metering, logistics, and field and body sensors. mMTC targets batteries with a lifespan of about 10 years and/or about 1 million devices per km2. mMTC enables to smoothly connect embedded sensors in all fields and is one of the most expected 5G use case. It is predicted that IoT devices will potentially reach 20.4 billion by 2020. Industrial IoT is one area where 5G will play a major role, enabling smart cities, asset tracking, smart utilities, agriculture, and security infrastructure.

URLLC will make it possible for devices and machines to communicate with ultra-reliability, very low latency and high availability, making it ideal for vehicular communication, industrial control, factory automation, remote surgery, smart grids and public safety applications. URLLC targets latency of about 1ms. URLLC includes new services that will transform industries with ultra-reliable/low latency links like remote control of critical infrastructure and an autonomous vehicle. The level of reliability and latency is vital to smart grid control, industrial automation, robotics, and drone control and coordination.

Next, multiple use cases included within the triangle of FIG. 4 are described in more detail.

5G may supplement fiber-to-the-home (FTTH) and cable-based broadband (or DOCSIS) as means for providing a stream evaluated from gigabits per second to several hundreds of megabits per second. Such fast speed may be necessary to deliver TV with resolution of 4K or more (6K, 8K or more) in addition to virtual reality (VR) and augmented reality (AR). VR and AR applications include immersive sports games. A specific application may require special network configuration. For example, in the VR game, in order for game companies to minimize latency, a core server may need to be integrated with an edge network server of a network operator.

The automotive sector is expected to be an important new driver for 5G, along with many use cases for mobile communications for vehicles. For example, entertainment for passengers requires high capacity and high mobile broadband at the same time. The reason for this is that future users will expect to continue their good quality connection independent of their location and speed. Other use cases for the automotive sector are augmented reality dashboards. The augmented reality dashboards display overlay information on top of what a driver is seeing through the front window through the augmented reality dashboards, identifying objects in the dark and telling the driver about the distances and movements of the objects. In the future, wireless modules will enable communication between vehicles, information exchange between vehicles and supporting infrastructure, and information exchange between vehicles and other connected devices (e.g., devices carried by pedestrians). Safety systems guide drivers on alternative courses of action to allow them to drive more safely and lower the risks of accidents. A next phase will be a remotely controlled vehicle or an autonomous vehicle. This requires ultra reliable and very fast communication between different autonomous vehicles and/or between vehicles and infrastructure. In the future, an autonomous vehicle may take care of all driving activity, allowing the driver to rest and concentrate only on traffic anomalies that the vehicle itself cannot identify. The technical requirements for autonomous vehicles require for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost and energy-efficient maintenance of the city or home. A similar setup can be done for each home, where temperature sensors, window and heating controllers, burglar alarms and home appliances are all connected wirelessly. Many of these sensors are typically low data rate, low power and low cost. However, for example, real time HD video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information can include the behaviors of suppliers and consumers, allowing the smart grid to improve the efficiency, reliability, economics and sustainability of the production and distribution of fuels such as electricity in an automated fashion. A smart grid can be seen as another sensor network with low delays.

The health sector has many applications that can benefit from mobile communications. Communications systems enable telemedicine, which provides clinical health care at a distance. It helps eliminate distance barriers and can improve access to medical services that would often not be consistently available in distant rural communities. It is also used to save lives in critical care and emergency situations. Wireless sensor networks based on mobile communication can provide remote monitoring and sensors for parameters such as heart rate and blood pressure.

Wireless and mobile communications are becoming increasingly important for industrial application. Wires are expensive to install and maintain. Therefore, the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Logistics and freight tracking are important use cases for mobile communications that enable the tracking of inventory and packages wherever they are through using location based information systems. The logistics and freight use cases typically require lower data rates but need wide coverage and reliable location information.

Examples of next generation communication (e.g., 6G) that can be applied to various embodiments of the present disclosure are described below.

### 6G system general

A 6G (wireless communication) system has purposes such as (i) a very high data rate per device, (ii) a very large number of connected devices, (iii) global connectivity, (iv) a very low latency, (v) a reduction in energy consumption of battery-free IoT devices, (vi) ultra-reliable connectivity, and (vii) connected intelligence with machine learning capability. The vision of the 6G system may include four aspects such as intelligent connectivity, deep connectivity, holographic connectivity, and ubiquitous connectivity, and the 6G system may satisfy the requirements shown in Table 1 below. That is, Table 1 shows an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion, and enhanced data security.

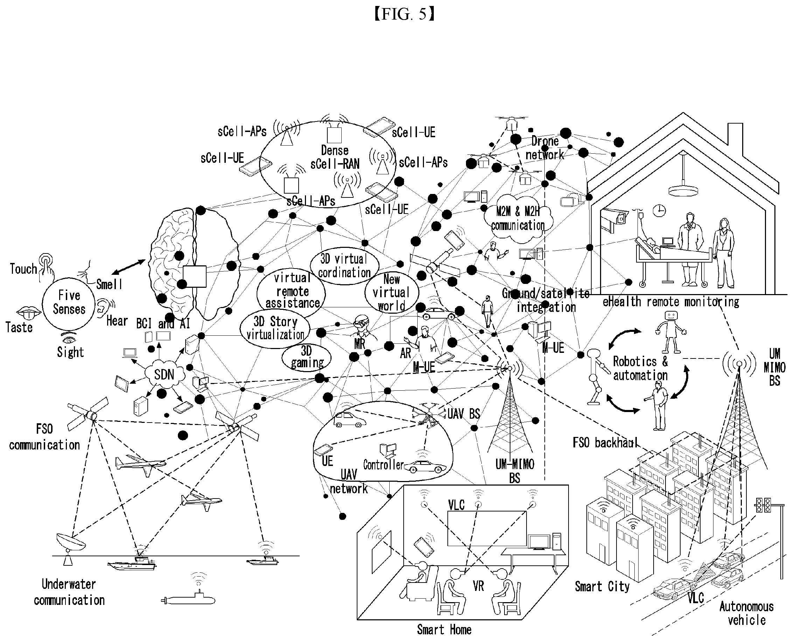

FIG. 5 illustrates an example of a communication structure providable in a 6G system.

The 6G system is expected to have 50 times greater simultaneous wireless communication connectivity than a 5G wireless communication system. URLLC, which is the key feature of 5G, will become more important technology by providing an end-to-end latency less than 1 ms in 6G communication. The 6G system may have much better volumetric spectrum efficiency unlike frequently used domain spectrum efficiency. The 6G system can provide advanced battery technology for energy harvesting and very long battery life, and thus mobile devices may not need to be separately charged in the 6G system. In 6G, new network characteristics may be as follows.
- Satellites integrated network: To provide a global mobile group, 6G will be integrated with satellite. Integration of terrestrial, satellite and public networks into one wireless communication system is critical for 6G.
- Connected intelligence: Unlike the wireless communication systems of previous generations, 6G is innovative and may update wireless evolution from "connected things" to "connected intelligence". AI may be applied in each step (or each signal processing procedure to be described later) of a communication procedure.
- Seamless integration of wireless information and energy transfer: A 6G wireless network may transfer power to charge batteries of devices such as smartphones and sensors. Therefore, wireless information and energy transfer (WIET) will be integrated.
- Ubiquitous super 3D connectivity: Access to networks and core network functions of drone and very low earth orbit satellite will establish super 3D connectivity in 6G ubiquitous.

In the new network properties cs of 6G described above, several general requirements may be as follows.
- Small cell networks: The idea of a small cell network has been introduced to improve received signal quality as a result of throughput, energy efficiency, and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network consisting of heterogeneous networks improves overall QoS and reduces costs.
- High-capacity backhaul: Backhaul connectivity is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability. Further, billions of devices can be shared on a shared physical infrastructure.

### Core implementation technology of 6G System

### Artificial Intelligence (AI)

Technology which is most important in the 6G system and will be newly introduced is AI. AI was not involved in the 4G system. The 5G system will support partial or very limited AI. However, the 6G system will support AI for full automation. Advance in machine learning will create a more intelligent network for real-time communication in 6G. When AI is introduced to communication, real-time data transmission can be simplified and improved. AI may determine a method of performing complicated target tasks using countless analysis. That is, AI can increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, and in particular, deep learning has been focused on the wireless resource management and allocation field. However, such studies have been gradually developed to the MAC layer and the physical layer, and in particular, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. The machine learning may also be used for antenna selection, power control, symbol detection, etc. in the MIMO system.

However, application of a deep neutral network (DNN) for transmission in the physical layer may have the following problems.

A deep learning based AI algorithm requires a lot of training data in order to optimize training parameters. However, due to limitations in acquiring data in a specific channel environment as the training data, a lot of training data is used offline. Static training for the training data in the specific channel environment may cause a contradiction between the diversity and dynamic characteristics of a radio channel.

Currently, the deep learning mainly targets real signals. However, signals of the physical layer of wireless communication are complex signals. For matching of the characteristics of a wireless communication signal, studies on a neural network for detecting a complex domain signal are further required.

Hereinafter, machine learning is described in more detail.

Machine learning refers to a series of operations to train a machine in order to create a machine capable of doing tasks that people cannot do or are difficult for people to do. Machine learning requires data and learning models. In the machine learning, a data learning method may be roughly divided into three methods, that is, supervised learning, unsupervised learning and reinforcement learning.

Neural network learning is to minimize an output error. The neural network learning refers to a process of repeatedly inputting training data to a neural network, calculating an error of an output and a target of the neural network for the training data, backpropagating the error of the neural network from an output layer to an input layer of the neural network for the purpose of reducing the error, and updating a weight of each node of the neural network.

The supervised learning may use training data labeled with a correct answer, and the unsupervised learning may use training data which is not labeled with a correct answer. That is, for example, in supervised learning for data classification, training data may be data in which each training data is labeled with a category. The labeled training data may be input to the neural network, and the error may be calculated by comparing the output (category) of the neural network with the label of the training data. The calculated error is backpropagated in the neural network in the reverse direction (i.e., from the output layer to the input layer), and a connection weight of respective nodes of each layer of the neural network may be updated based on the backpropagation. Change in the updated connection weight of each node may be determined depending on a learning rate. The calculation of the neural network for input data and the backpropagation of the error may construct a learning cycle (epoch). The learning rate may be differently applied based on the number of repetitions of the learning cycle of the neural network. For example, in the early stage of learning of the neural network, efficiency can be increased by allowing the neural network to rapidly ensure a certain level of performance using a high learning rate, and in the late of learning, accuracy can be increased using a low learning rate.

The learning method may vary depending on the feature of data. For example, in order for a reception end to accurately predict data transmitted from a transmission end on a communication system, it is preferable that learning is performed using the supervised learning rather than the unsupervised learning or the reinforcement learning.

The learning model corresponds to the human brain and may be regarded as the most basic linear model. However, a paradigm of machine learning using, as the learning model, a neural network structure with high complexity, such as artificial neural networks, is referred to as deep learning.

Neural network cores used as the learning method may roughly include a deep neural network (DNN) method, a convolutional deep neural network (CNN) method, and a recurrent Boltzmann machine (RNN) method.

The artificial neural network is an example of connecting several perceptrons.

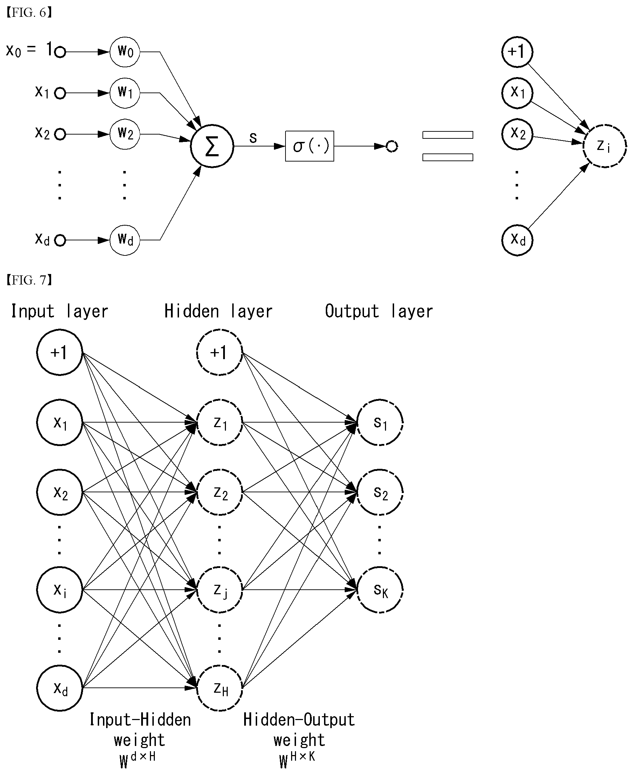

FIG. 6 illustrates an example of a structure of a perceptron.

Referring to FIG. 6, when an input vector x=(x1, x2, ..., xd) is input, each component is multiplied by a weight (W1, W2, ..., Wd), and all the results are summed. After that, the entire process of applying an activation function σ(·) is called a perceptron. The huge artificial neural network structure may extend the simplified perceptron structure illustrated in FIG. 6 to apply the input vector to different multidimensional perceptrons. For convenience of explanation, an input value or an output value is referred to as a node.

The perceptron structure illustrated in FIG. 6 may be described as consisting of a total of three layers based on the input value and the output value. FIG. 7 illustrates an artificial neural network in which the number of (d+1) dimensional perceptrons between a first layer and a second layer is H, and the number of (H+1) dimensional perceptrons between the second layer and a third layer is K, by way of example.

FIG. 7 illustrates an example of a structure of a multilayer perceptron.

A layer where the input vector is located is called an input layer, a layer where a final output value is located is called an output layer, and all layers located between the input layer and the output layer are called a hidden layer. FIG. 7 illustrates three layers, by way of example. However, since the number of layers of the artificial neural network is counted excluding the input layer, it can be seen as a total of two layers. The artificial neural network is constructed by connecting the perceptrons of a basic block in two dimensions.

The above-described input layer, hidden layer, and output layer can be jointly applied in various artificial neural network structures, such as CNN and RNN to be described later, as well as the multilayer perceptron. The greater the number of hidden layers, the deeper the artificial neural network is, and a machine learning paradigm that uses the sufficiently deep artificial neural network as a learning model is called deep learning. In addition, the artificial neural network used for deep learning is called a deep neural network (DNN).

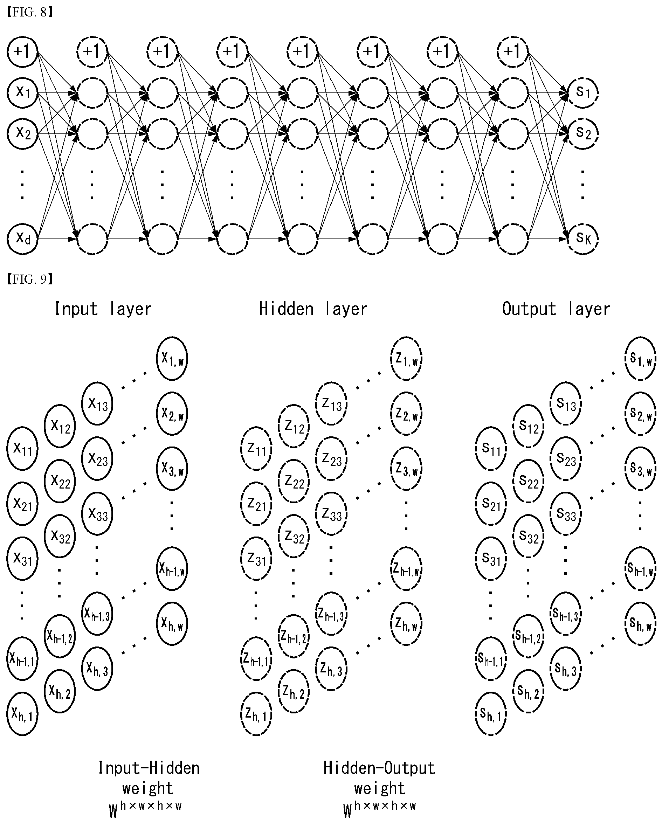

FIG. 8 illustrates an example of a deep neural network.

The deep neural network illustrated in FIG. 8 is a multilayer perceptron consisting of eight hidden layers + eight output layers. The multilayer perceptron structure is expressed as a fully connected neural network. In the fully connected neural network, a connection relationship does not exist between nodes located at the same layer, and a connection relationship exists only between nodes located at adjacent layers. The DNN has a fully connected neural network structure and is composed of a combination of multiple hidden layers and activation functions, so it can be usefully applied to understand correlation characteristics between input and output. The correlation characteristic may mean a joint probability of input and output.

Based on how the plurality of perceptrons are connected to each other, various artificial neural network structures different from the above-described DNN can be formed.

FIG. 9 illustrates an example of a structure of a convolutional neural network.

In the DNN, nodes located inside one layer are arranged in a one-dimensional longitudinal direction. However, in FIG. 9, it may be assumed that w nodes horizontally and h nodes vertically are arranged in two dimensions (convolutional neural network structure of FIG. 9). In this case, since in a connection process leading from one input node to the hidden layer, a weight is given for each connection, a total of h×w weights needs to be considered. Since there are h×w nodes in the input layer, a total of h2w2 weights are required between two adjacent layers.

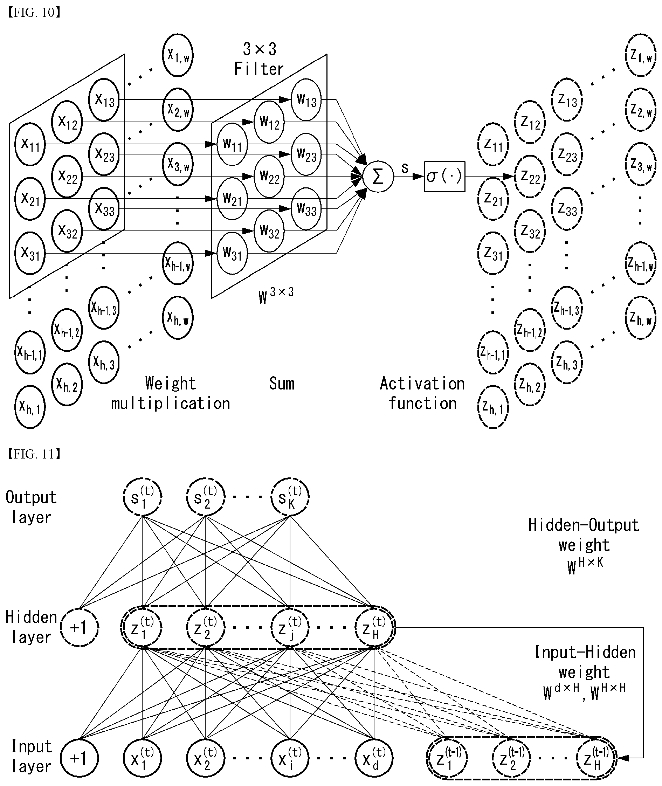

The convolutional neural network of FIG. 9 has a problem in that the number of weights increases exponentially depending on the number of connections. Therefore, instead of considering the connections of all the nodes between adjacent layers, it is assumed that a small-sized filter exists, and a weighted sum and an activation function calculation are performed on an overlap portion of the filters as illustrated in FIG. 10.

FIG. 10 illustrates an example of a filter operation of a convolutional neural network.

One filter has a weight corresponding to the number as much as its size, and learning of the weight may be performed so that a certain feature on an image can be extracted and output as a factor. In FIG. 10, a filter having a size of 3×3 is applied to the upper leftmost 3×3 area of the input layer, and an output value obtained by performing a weighted sum and an activation function calculation for a corresponding node is stored in z22.

The filter performs the weighted sum and the activation function calculation while moving horizontally and vertically by a predetermined interval when scanning the input layer, and places the output value at a location of a current filter. This calculation method is similar to the convolution operation on images in the field of computer vision. Thus, a deep neural network with this structure is referred to as a convolutional neural network (CNN), and a hidden layer generated as a result of the convolution operation is referred to as a convolutional layer. In addition, a neural network in which a plurality of convolutional layers exists is referred to as a deep convolutional neural network (DCNN).

At the node where a current filter is located at the convolutional layer, the number of weights may be reduced by calculating a weighted sum including only nodes located in an area covered by the filter. Hence, one filter can be used to focus on features for a local area. Accordingly, the CNN can be effectively applied to image data processing in which a physical distance on the 2D area is an important criterion. In the CNN, a plurality of filters may be applied immediately before the convolution layer, and a plurality of output results may be generated through a convolution operation of each filter.

There may be data whose sequence characteristics are important depending on data attributes. A structure, in which a method of inputting one element on the data sequence at each time step considering a length variability and a relationship of the sequence data and inputting an output vector (hidden vector) of a hidden layer output at a specific time step together with a next element on the data sequence is applied to the artificial neural network, is referred to as a recurrent neural network structure.

FIG. 11 illustrates an example of a neural network structure in which a circular loop exists.

Referring to FIG. 11, a recurrent neural network (RNN) is a structure in which in a process of inputting elements (x1(t), x2(t),..., xd(t)) of any line of sight 't' on a data sequence to a fully connected neural network, hidden vectors (z1(t-1), z2(t-1), ..., zH(t-1)) are input together at an immediately previous time step (t-1) to apply a weighted sum and an activation function. A reason for transferring the hidden vectors at a next time step is that information within the input vector in previous time steps is considered to be accumulated on the hidden vectors of a current time step.

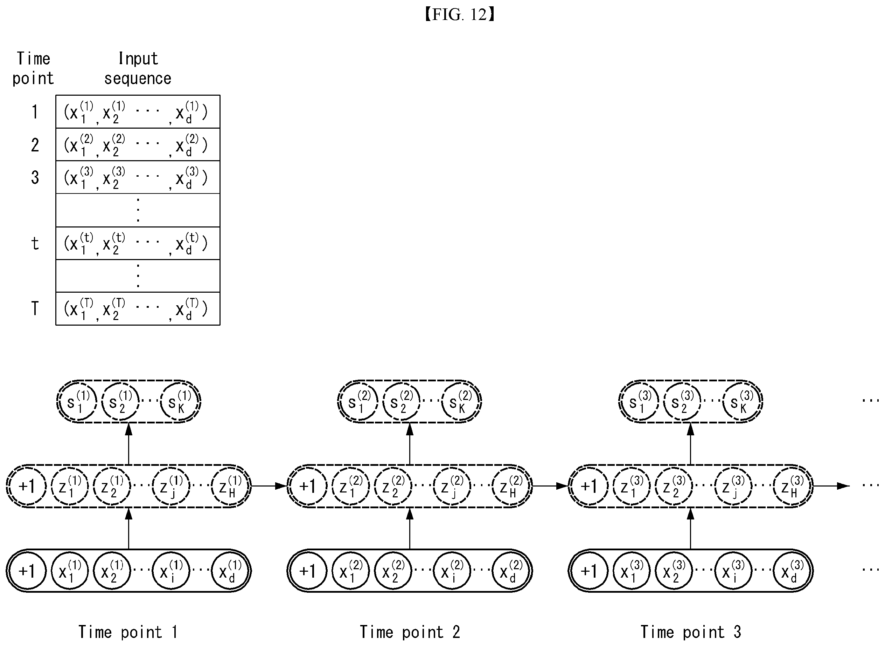

FIG. 12 illustrates an example of an operation structure of a recurrent neural network.

Referring to FIG. 12, the recurrent neural network operates in a predetermined order of time with respect to an input data sequence.

Hidden vectors (z1(1), z2(1), ..., zH(1)) when input vectors (x1(t), x2(t), ..., xd(t)) at a time step 1 are input to the recurrent neural network, are input together with input vectors (x1(2), x2(2), ..., xd(2)) at a time step 2 to determine vectors (z1(2), z2(2), ..., zH(2)) of a hidden layer through a weighted sum and an activation function. This process is repeatedly performed at time steps 2, 3, ..., T.

When a plurality of hidden layers are disposed in the recurrent neural network, this is referred to as a deep recurrent neural network (DRNN). The recurrent neural network is designed to be usefully applied to sequence data (e.g., natural language processing).

A neural network core used as a learning method includes various deep learning methods such as a restricted Boltzmann machine (RBM), a deep belief network (DBN), and a deep Q-network, in addition to the DNN, the CNN, and the RNN, and may be applied to fields such as computer vision, speech recognition, natural language processing, and voice/signal processing.

Recently, attempts to integrate AI with a wireless communication system have appeared, but this has been concentrated in the field of wireless resource management and allocation in the application layer, network layer, in particular, deep learning. However, such research is gradually developing into the MAC layer and the physical layer, and in particular, attempts to combine deep learning with wireless transmission in the physical layer have appeared. The AI-based physical layer transmission refers to applying a signal processing and communication mechanism based on an AI driver, rather than a traditional communication framework in the fundamental signal processing and communication mechanism. For example, deep learning-based channel coding and decoding, deep learning-based signal estimation and detection, deep learning-based MIMO mechanism, AI-based resource scheduling and allocation, and the like, may be included.

### Terahertz (THz) Communication

A data transfer rate can be increased by increasing the bandwidth. This can be performed by using sub-TH communication as a wide bandwidth and applying advanced massive MIMO technology. THz waves, which are known as submillimeter radiation, generally indicate a frequency band between 0.1 THz and 10 THz with the corresponding wavelengths in the range of 0.03 mm-3 mm. A band range of 100 GHz to 300 GHz (sub THz band) is regarded as a main part of the THz band for cellular communication. When the sub-THz band is added to the mmWave band, the 6G cellular communication capacity increases. 300 GHz-3 THz among the defined THz band is in a far infrared (IR) frequency band. Although the 300 GHz-3 THz band is part of the optical band, it is at the border of the optical band and is immediately after the RF band. Therefore, this 300 GHz-3 THz band shows similarity with RF.

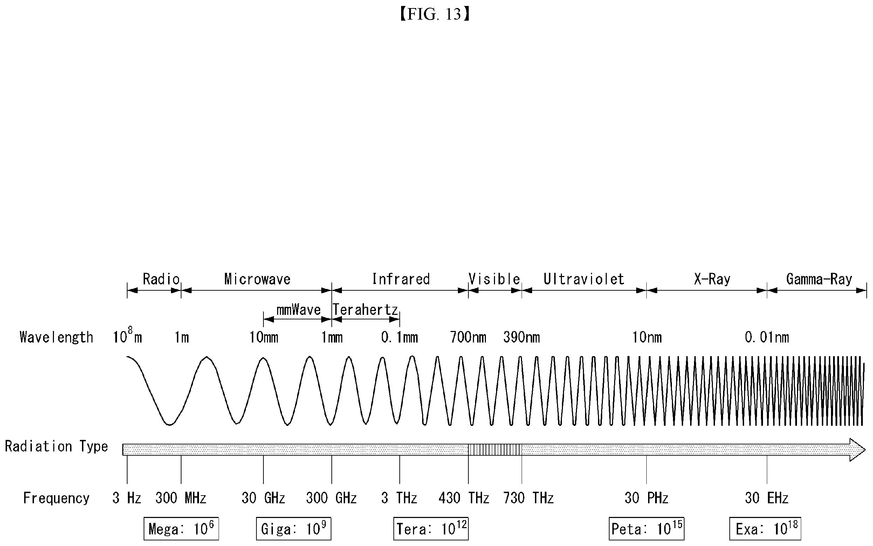

FIG. 13 illustrates an example of an electromagnetic spectrum.

The main characteristics of THz communication include (i) a bandwidth widely available to support a very high data transfer rate and (ii) a high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Through this, an advanced adaptive arrangement technology capable of overcoming a range limitation can be used.

### Optical Wireless Technology

Optical wireless communication (OWC) technologies are envisioned for 6G communication in addition to RF based communications for all possible device-to-access networks. These networks access network-to-backhaul/fronthaul network connectivity. The OWC technologies have already been used since 4G communication systems, but will be used more widely to meet the demands of the 6G communication system. The OWC technologies, such as light fidelity, visible light communication, optical camera communication, and FSO communication based on the optical band, are already well-known technologies. Communications based on wireless optical technologies can provide very high data rates, low latencies, and secure communications. LiDAR, which is also based on the optical band, is a promising technology for very high-resolution 3D mapping in 6G communications.

### FSO Backhaul Network

Characteristics of a transmitter and a receiver of the FSO system are similar to characteristics of an optical fiber network. Therefore, data transmission of the FSO system similar to that of the optical fiber system. Accordingly, FSO can be a good technology for providing backhaul connectivity in the 6G system along with the optical fiber network. If FSO is used, very longdistance communication is possible even at a distance of 10,000 km or more. FSO supports massive backhaul connectivity for remote and non-remote areas such as sea, space, underwater, and isolated islands. FSO also supports cellular BS connectivity.

### Massive MIMO Technology

One of core technologies for improving spectral efficiency is to apply MIMO technology. When the MIMO technology is improved, the spectral efficiency is also improved. Therefore, massive MIMO technology will be important in the 6G system. Since the MIMO technology uses multiple paths, multiplexing technology and beam generation and management technology suitable for the THz band should be significantly considered so that data signals can be transmitted through one or more paths.

### Block chain

A block chain will be an important technology for managing large amounts of data in future communication systems. The block chain is a form of distributed ledger technology, and the distributed ledger is a database distributed across numerous nodes or computing devices. Each node duplicates and stores the same copy of the ledger. The block chain is managed by a P2P network. This may exist without being managed by a centralized institution or server. Block chain data is collected together and is organized into blocks. The blocks are connected to each other and protected using encryption. The block chain completely complements large-scale IoT through improved interoperability, security, privacy, stability, and scalability. Accordingly, the block chain technology provides several functions such as interoperability between devices, high-capacity data traceability, autonomous interaction of different IoT systems, and large-scale connection stability of 6G communication systems.

### 3D Networking

The 6G system integrates the ground and air networks to support communications for users in the vertical extension. The 3D BSs will be provided by low-orbit satellites and UAVs. The addition of new dimensions in terms of height and the associated degrees of freedom makes 3D connectivity significantly different from traditional 2D networks.

### Quantum Communication

Unsupervised reinforcement learning in networks is promising in the context of 6G networks. Supervised learning approaches will not be practical for labeling large amounts of data generated in 6G. Unsupervised learning does not require labeling. Therefore, this technique can be used to create the representations of complex networks autonomously. By combining reinforcement learning and unsupervised learning, it is possible to operate the network truly autonomously.

### Unmanned Aerial Vehicle

An unmanned aerial vehicle (UAV) or drone will be an important factor in 6G wireless communication. In most cases, a high-speed data wireless connection is provided using UAV technology. A BS entity is installed in the UAV to provide cellular connectivity. The UAVs have specific features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC, and mMTC. The UAV can also support a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Cell-free Communication

The tight integration of multiple frequencies and different communication technologies is very important in 6G systems. As a result, the user can move seamlessly from one network to another network without the need for making any manual configurations in the device. The best network is automatically selected from the available communication technology. This will break the limits of the concept of cells in wireless communications. Currently, the user's movement from one cell to another cell causes too many handovers in dense networks, and also causes handover failures, handover delays, data losses, and the ping-pong effect. The 6G cell-free communications will overcome all these and provide better QoS. Cell-free communication will be achieved through multi-connectivity and multi-tier hybrid techniques and by different and heterogeneous radios in the devices.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without battery will be supported in 6G communication.

### Integration of Sensing and Communication

An autonomous wireless network is a function for continuously detecting a dynamically changing environment state and exchanging information between different nodes. In 6G, sensing will be tightly integrated with communication to support autonomous systems.

### Integration of Access Backhaul Network

In 6G, the density of access networks will be enormous. Each access network is connected by optical fiber and backhaul connectivity such as FSO network. To cope with a very large number of access networks, there will be a tight integration between the access and backhaul networks.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Large Intelligent Surface (LIS)

In the THz band signal, since the straightness is strong, there may be many shaded areas due to obstacles. By installing the LIS near these shaded areas, LIS technology, that expands a communication area, enhances communication stability, and enables additional optional services, becomes important. The LIS is an artificial surface made of electromagnetic materials, and can change propagation of incoming and outgoing radio waves. The LIS can be viewed as an extension of massive MIMO, but is different from the massive MIMO in an array structure and an operating mechanism. Further, the LIS has an advantage such as low power consumption, because this operates as a reconfigurable reflector with passive elements, that is, signals are only passively reflected without using active RF chains. In addition, since each of the passive reflectors of the LIS has to independently adjust the phase shift of an incident signal, this may be advantageous for wireless communication channels. By properly adjusting the phase shift through an LIS controller, the reflected signal can be collected at a target receiver to boost the received signal power.

### Terahertz (THz) wireless communication general

THz wireless communication uses wireless communication using a THz wave having a frequency of approximately 0.1 to 10 THz (1 THz = 1012 Hz) and may refer to THz band wireless communication using a very high carrier frequency of 100 GHz or more. The THz wave is located between radio frequency (RF)/millimeter (mm) and infrared bands, and (i) transmits nonmetallic/non-polarizable materials better than visible/infrared rays, has a shorter wavelength than the RF/millimeter wave to have high straightness, and is capable of beam convergence. In addition, the photon energy of the THz wave is only a few meV and thus is harmless to the human body. A frequency band which is expected to be used for THz wireless communication may be D-band (110 GHz to 170 GHz) or H-band (220 GHz to 325 GHz) band with a low propagation loss due to molecular absorption in air. Standardization discussion on THz wireless communication is being discussed mainly in IEEE 802.15 THz working group in addition to 3GPP, and standard documents issued by a task group of IEEE 802.15 (e.g., TG3d, TG3e) can specify and supplement the description of the present disclosure. The THz wireless communication may be applied to wireless cognition, sensing, imaging, wireless communication, THz navigation, etc.

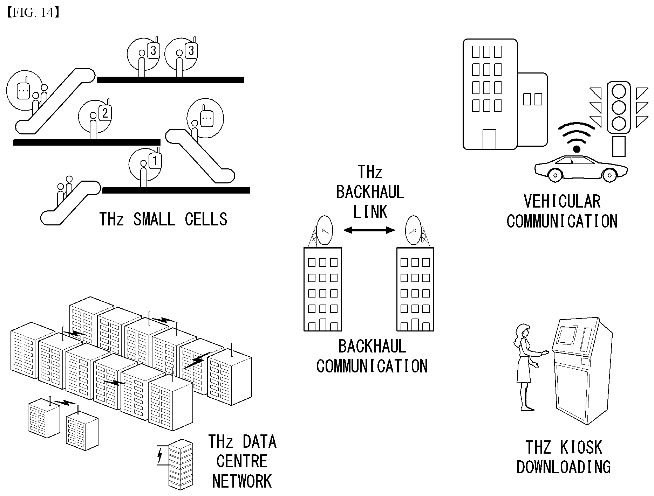

FIG. 14 illustrates an example of a THz communication application.

As illustrated in FIG. 14, a THz wireless communication scenario may be classified into a macro network, a micro network, and a nanoscale network. In the macro network, THz wireless communication may be applied to vehicle-to-vehicle connectivity and backhaul/fronthaul connectivity. In the micro network, THz wireless communication may be applied to near-field communication such as indoor small cells, fixed point-to-point or multi-point connection such as wireless connection in a data center, and kiosk downloading.

Table 2 below shows an example of technology which can be used in the THz wave.

**[Table 2]**

| | |
|---|---|
| Transceivers Device | Available immature: UTC-PD, RTD and SBD |
| Modulation and coding | Low order modulation techniques (OOK, QPSK), LDPC, Reed Soloman, Hamming, Polar, Turbo |
| Antenna | Omni and Directional, phased array with low number of antenna elements |
| Bandwidth | 69GHz (or 23 GHz) at 300GHz |
| Channel models | Partially |
| Data rate | 100Gbps |
| Outdoor deployment | No |
| Free space loss | High |
| Coverage | Low |
| Radio Measurements | 300GHz indoor |
| Device size | Few micrometers |

THz wireless communication can be classified based on a method for generating and receiving THz. The method of generating THz can be classified as an optical device or an electronic device-based technology.

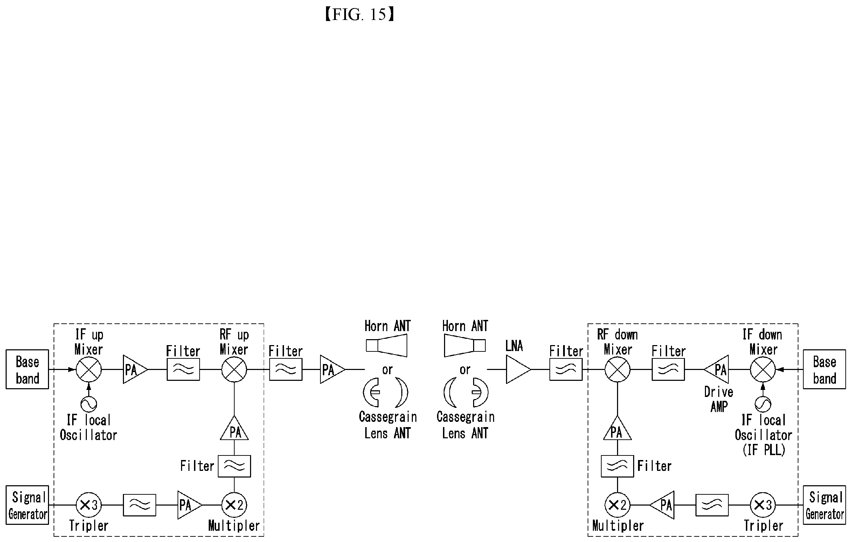

FIG. 15 illustrates an example of an electronic device-based THz wireless communication transceiver.

The method of generating THz using an electronic device includes a method using a semiconductor device such as a resonant tunneling diode (RTD), a method using a local oscillator and a multiplier, a monolithic microwave integrated circuit (MMIC) method using a compound semiconductor high electron mobility transistor (HEMT) based integrated circuit, a method using a Si-CMOS based integrated circuit, and the like. In FIG. 15, a multiplier (e.g., doubler, tripler) is applied to increase the frequency, and radiation is performed by an antenna via a subharmonic mixer. Since the THz band forms a high frequency, the multiplier is essential. Here, the multiplier is a circuit that allows the frequency to have an output frequency which is N times an input frequency, and the multiplier matches a desired harmonic frequency and filters out all the remaining frequencies. In addition, beamforming may be implemented by applying an array antenna or the like to the antenna of FIG. 15. In FIG. 15, IF denotes an intermediate frequency, a tripler and a multiplier denote a multiplier, PA denotes a power amplifier, LNA denotes a low noise amplifier, and PLL denotes a phase-locked loop.

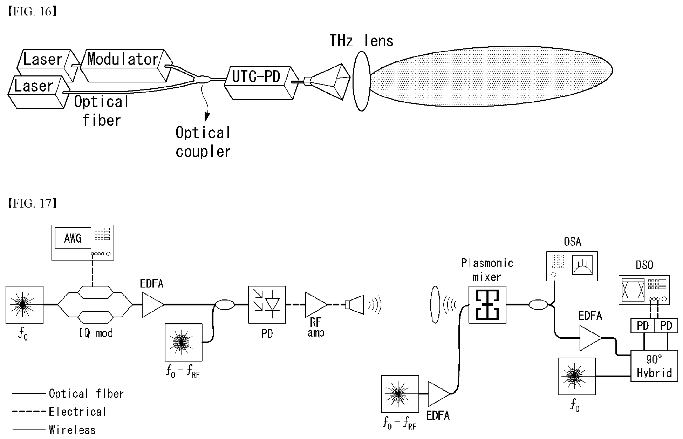

FIG. 16 illustrates an example of a method of generating an optical device-based THz signal.

FIG. 17 illustrates an example of an optical device-based THz wireless communication transceiver.

The optical device-based THz wireless communication technology refers to a method of generating and modulating a THz signal using an optical device. The optical device-based THz signal generation technology refers to a technology that generates an ultrahigh-speed optical signal using a laser and an optical modulator and converts it into a THz signal using an ultrahigh-speed photodetector. This technology is easy to increase the frequency compared to the technology using only the electronic device, can generate a high-power signal, and can obtain a flat response characteristic in a wide frequency band. In order to generate the optical device-based THz signal, as illustrated in FIG. 16, a laser diode, a broadband optical modulator, and an ultrahigh-speed photodetector are required. In FIG. 16, light signals of two lasers having different wavelengths are combined to generate a THz signal corresponding to difference in a wavelength between the lasers. In FIG. 16, an optical coupler refers to a semiconductor device that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 17, an erbium-doped fiber amplifier (EDFA) denotes an optical fiber amplifier to which erbium is added, a photo detector (PD) denotes a semiconductor device capable of converting an optical signal into an electrical signal, and OSA denotes an optical sub assembly in which various optical communication functions (e.g., photoelectric conversion, electrophotic conversion, etc.) are modularized as one component, and DSO denotes a digital storage oscilloscope.

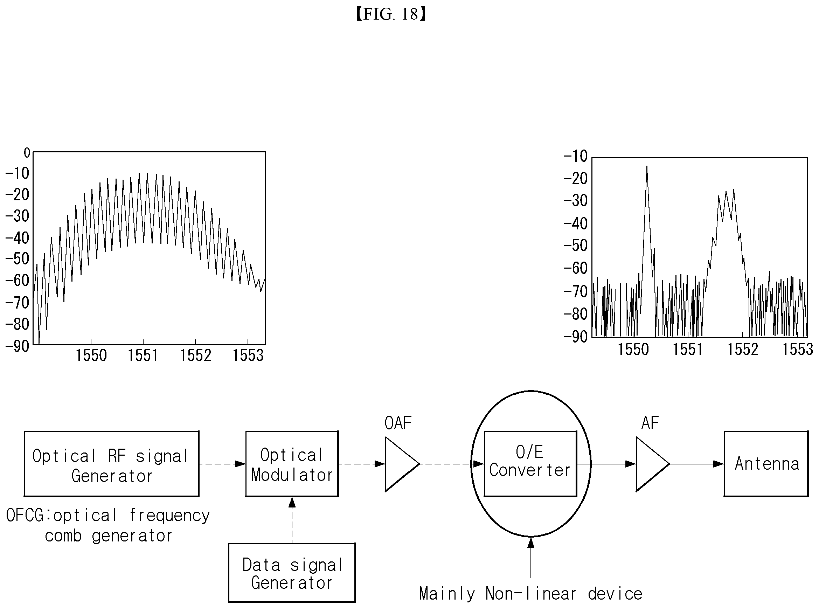

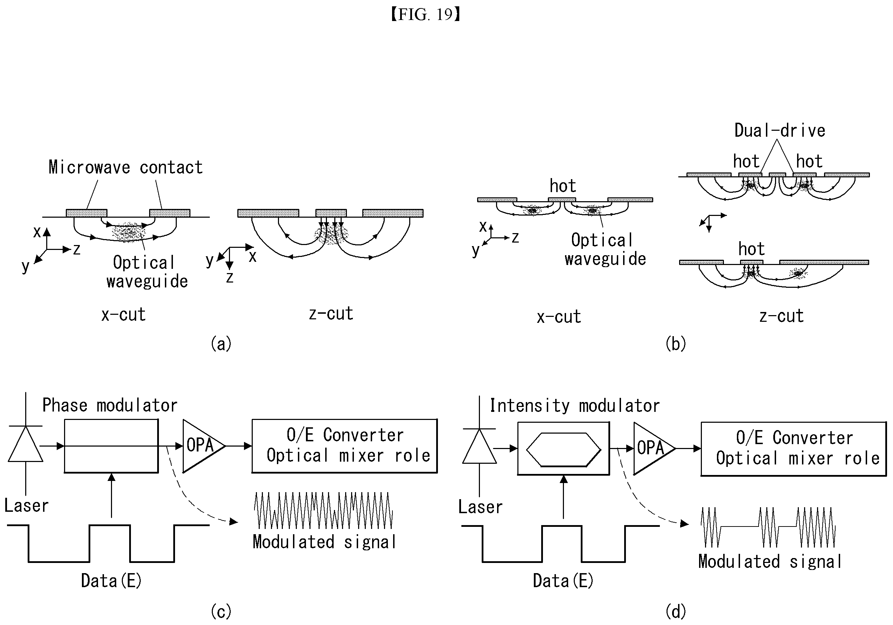

A structure of a photoelectric converter is described with reference to FIGS. 18 and 19.

FIG. 18 illustrates a structure of a photoinc source-based transmitter.

FIG. 19 illustrates a structure of an optical modulator.

Generally, an optical source of a laser may change a phase of a signal by passing through an optical wave guide. In this instance, data is carried by changing electrical characteristics through a microwave contact, or the like. Thus, an optical modulator output is formed in the form of a modulated waveform. A photoelectric modulator (O/E converter) may generate THz pulses based on an optical rectification operation by a nonlinear crystal, a photoelectric conversion (O/E conversion) by a photoconductive antenna, and emission from a bunch of relativistic electrons. The THz pulse generated in the above manner may have a length of a unit from femto second to pico second. The photoelectric converter (O/E converter) performs down-conversion using non-linearity of the device.

Considering THz spectrum usage, multiple contiguous GHz bands are likely to be used as fixed or mobile service usage for the terahertz system. According to outdoor scenario criteria, an available bandwidth may be classified based on oxygen attenuation 10^2 dB/km in the spectrum of up to 1 THz. Hence, a framework in which the available bandwidth consists of several band chunks may be considered. As an example of the framework, if the length of the THz pulse for one carrier is set to 50 ps, the bandwidth (BW) is about 20 GHz.

The effective down-conversion from the infrared (IR) band to the THz band depends on how to utilize the nonlinearity of the photoelectric converter (O/E converter). That is, for down-conversion into a desired THz band, design of the photoelectric converter (O/E converter) having the most ideal non-linearity to move to the corresponding THz band is required. If a photoelectric converter (O/E converter) which is not suitable for a target frequency band is used, there is a high possibility that an error occurs with respect to an amplitude and a phase of the corresponding pulse.

In a single carrier system, a THz transmission/reception system may be implemented using one photoelectric converter. In a multi-carrier system, as many photoelectric converters as the number of carriers may be required, which may vary depending on the channel environment. Particularly, in a multi-carrier system using multiple broadbands according to the plan related to the above-described spectrum usage, the phenomenon will be prominent. In this regard, a frame structure for the multi-carrier system may be considered. A down-frequency-converted signal based on the photoelectric converter may be transmitted in a specific resource area (e.g., a specific frame). The frequency domain of the specific resource area may include a plurality of chunks. Each chunk may consist of at least one component carrier (CC).

### Detailed description of various embodiments of the present disclosure

Hereinafter, various embodiments of the present disclosure will be described in more detail.

The present disclosure relates to a device and method for an arbitrator-based quantum signature scheme using the inherent properties of quantum. Specifically, the present disclosure proposes a device and method capable of minimizing an amount of quantum information transmitted and resource usage between entities exchanging information during a signing process by varying a transmission path for each component of signature information transmitted in an arbitrator-based quantum signature scheme among quantum signature schemes for non-repudiation, authentication, and forgery prevention of message information transmitted between a sender and a receiver.

### Background technology for various embodiments of the present disclosure

Digital signature schemes are a method that provides a solution to ensure the integrity, authentication, and non-repudiation of messages, excluding confidentiality, which are the four goals of information security. Existing authentication schemes cannot respond when trust between entities exchanging information is broken. Therefore, digital signature schemes are necessary and provide functions for third-party verification for dispute resolution, authentication of the source of the message content, and verification of whether it has been forged.

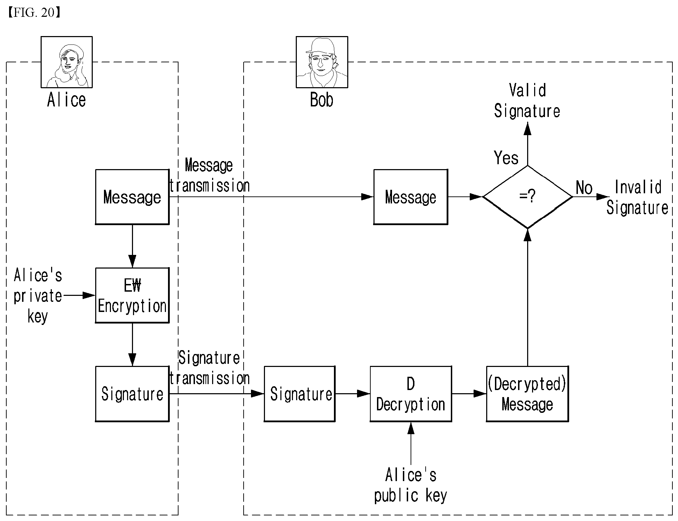

FIG. 20 illustrates an example of an existing direct signature scheme in a system applicable to the present disclosure.

### Classical Digital Signature Scheme

Existing digital signature schemes may be roughly divided into direct signature schemes and arbitrator-based signature schemes. First, the direct signature scheme has a digital signature structure where only a sender and a receiver exist as illustrated in FIG. 20, and are mainly modeled using a public key cryptographic algorithm and a hash function. It is assumed that the receiver has a public key of the sender, and it is a method of signing the entire message or hash with a private key of the sender and decrypting it with a public key of the receiver. ElGamal signatures and discrete logarithm-based public key algorithms are representative digital signature technologies that follow this method. However, the validity of a group of digital signature technologies may depend on the security of the private key of the sender, and since there is still a problem where the sender may claim to have lost or had his/her private key stolen, or where the sender's private key may actually be stolen, the intervention of a third party is ultimately required. Therefore, although there is an advantage in structural simplicity, it may be difficult to apply in places requiring very high security.

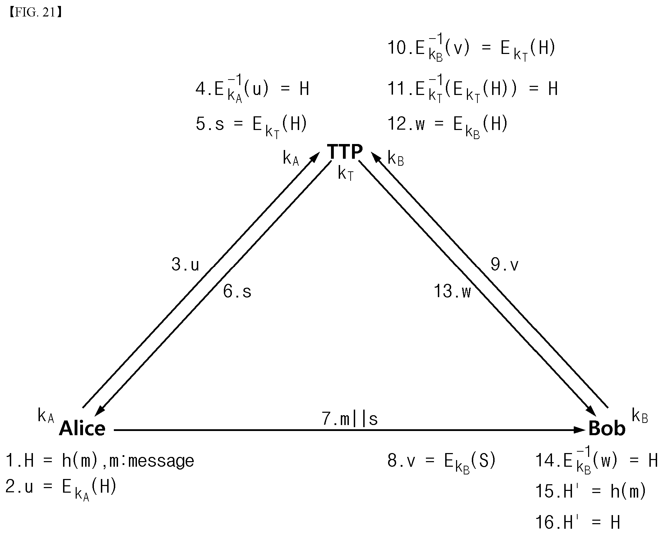

FIG. 21 illustrates an example of an existing arbitrator-based signature scheme in a system applicable to the present disclosure.

To address this, an arbitrator-based quantum signature scheme has emerged, and an arbitrator is introduced unlike the direct signature scheme. That is, the signature scheme is a model using a conventional cryptographic algorithm and an arbitrator, and the arbitrator performs a role of verifying the validity of a signed message. Therefore, the arbitrator shall maintain neutrality and requires appropriate trust, and can be implemented using either a private key or a public key algorithm. Although the scheme can secure a higher level of information security compared to the direct signature scheme, it still has the problem that the configuration is more complex because the arbitrator shall be used, and the reliability of the arbitrator shall be always maintained. FIG. 21 illustrates a configuration of a signing process of a quantum signature scheme using a symmetric key-based cryptographic system and an unconditionally trusted arbitrator (TTP), as an example. First, Alice generates a message 'm' and generates a hash value H using her hash function 'h'. Then, she encrypts it with a secret key K_A that is shared with an arbitrator and transmits it to the arbitrator. The arbitrator receiving it decrypts it with the same key, and then encrypts it with a key K_T that only the arbitrator possesses, and transmits it to Alice again. Alice transmits signature information S and the message 'm' to Bob. Next, Bob encrypts the received signature information using a secret key K_B that Bob and the arbitrator possess, transmits it to the arbitrator, and keeps the message for himself. The arbitrator uses secret keys possessed by the arbitrator to recover H included in the signature information, encrypts it using K_B, and transmits it to Bob again. Based on this, Bob determines whether the signature is accepted by verifying whether H^' and H generated from his message 'm' match each other. In other words, the digital signature scheme comprises three steps: an initialization step of distributing symmetric keys, a step of generating signature information from a message, and a step in which signature verification is performed on Bob with the help of an arbitrator after the signature information is transmitted.

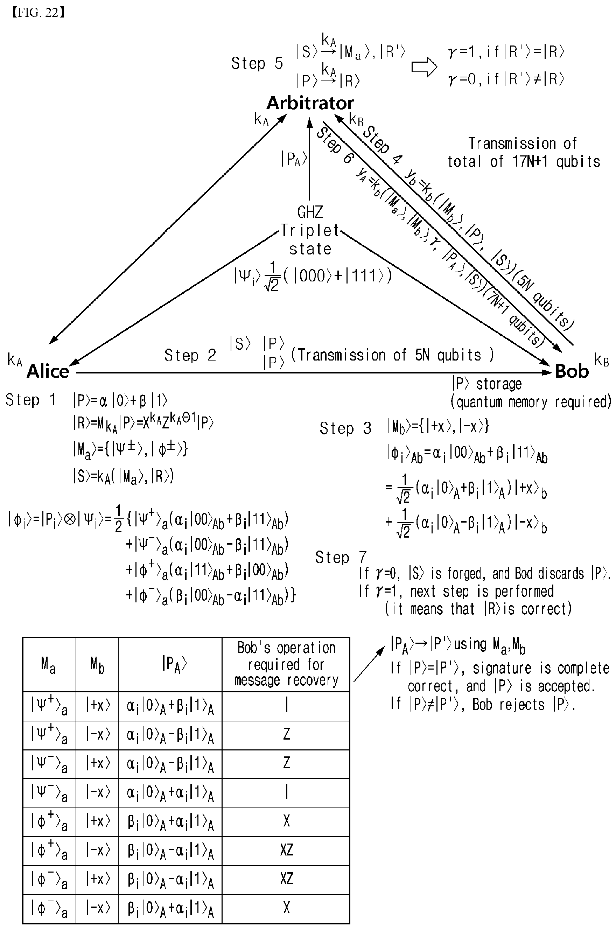

FIG. 22 illustrates an example of an arbitrator-based quantum signature scheme using an existing GHZ state in a system applicable to the present disclosure.

### Quantum Digital Signature Scheme

Quantum digital signature schemes can ensure unconditional security by utilizing the properties of quantum mechanics. Similar to a group of existing digital signature technologies, they may be classified into a quantum one-time signature consisting of combinations of a quantum one-way function, a private key, and a public key, and an arbitrated quantum signature based on an arbitrator. Among the quantum digital signature schemes, the quantum one-time signature follows the configuration of Lamport-Diffle One-Time Signatures. The sender generates a public key to be shared by the sender and the receiver by using a private key as an input to the quantum one-way function. Next, the sender transmits information on a location mapped to the message among the message and the private key to the receiver as the signature information. In the verification process, the receiver generates the message using the received signature information and the same quantum one-way function as the sender, and verifies whether the signature passes by checking whether it matches the message received from the sender. As in the direct signature scheme among the existing signature schemes, the signature is performed using only the sender and the receiver.

On the other hand, the arbitrated quantum signature scheme was introduced by G. Zeng in 2002 and is an arbitrator-based quantum signature scheme using a symmetric key and a GHZ state using quantum key distribution technology. FIG. 22 illustrates configuration of an arbitrator-based quantum digital signature scheme and proceeds through steps of preparation, signature generation, and signature verification.

First, in the preparation step, a symmetric key *K_{A}* between Alice and an arbitrator and a symmetric key *K_{B}* between Bob and the arbitrator are distributed, and the arbitrator generates a GHZ state and distributes it when there is a request from Alice and Bob.

Next, in the signature generation step, the arbitrator generates N quantum messages |*P*〉=*α*|0〉+*β*|1〉 at Alice and then transforms a message quantum state into another quantum state |*R*〉 using a quantum one-time pad algorithm and *K_{A}*. Next, the arbitrator performs a Bell state measurement of his/her messages |*P*〉 and GHZ state particles of Alice, and stores the result in |*Mₐ*〉. Then, the arbitrator generates signature information |*S*〉 at Alice. This process is performed on |*Mₐ*〉 and |*R*〉 using the quantum one-time pad algorithm and *K_{A}*. As an example of application, the signature information |*S*〉 may be generated by applying the quantum one-time pad algorithm operation defined as *X^{kA}Z*^{*kA*⊖1} to |*Mₐ*〉 and |*R*〉. The generated |*S*〉 and |*P*〉 are transmitted to Bob. Bob stores one of the transmitted |*P*〉 for use in the signature verification process, encrypts the remainders |*S*〉 and |*P*〉 using *K_{B}*, and transmits it to the arbitrator. Additionally, Bob measures his GHZ state particles along the X-axis and stores a result of the measurement in |*M_{b}*〉. The arbitrator decrypts the received *y_{b}* using *K_{B}* to obtain |*S*〉 and |*R*〉. Among them, |*S*〉 is decrypted using *K_{A}* to obtain |*R*'〉, and a transformation operator based on *K_{A}* is applied to |*P*〉 obtain |*R*〉. Based on whether the two values obtained through this are identical, it is determined whether a factor *γ*, which can determine whether the signature information is forged, is 0 or 1. Next, the arbitrator encrypts the measurement value |*Mₐ*〉 of Alice, the measurement value |*M_{b}*〉 of Bob, γ, the GHZ state particle |*P_{A}*〉 that is not measured by the arbitrator, and the signature information |*S*〉 using *K_{B}*, and then sends them back to Bob.

Finally, in the signature verification step, Bob decrypts using the same *K_{B}* and then performs a verification procedure of the signature information in two steps. First, Bob verifies whether |*R*〉 in the signature information has been forged using the value of *γ*. If *γ* = 0, the signature is forged, so Bob discards the message |*P*〉 and stops the process. However, if *γ* = 1, it means that |*R*〉 in the components of the signature information is correct, so Bob proceeds with the second signature verification process. In the second signature verification process, Bob generates |*p'*〉 by applying an appropriate operator necessary to generate |*P*〉 from the |*P_{A}*〉 state, which can be inferred from a correlation of the GHZ state from the measurement results of |*Mₐ*〉 and |*M_{b}*〉, to the unmeasured GHZ state particle |*P_{A}*〉 of the arbitrator received from the arbitrator. Next, he checks whether |*P*〉 stored in Bob matches the previously obtained |*p*'〉 to confirm the complete correctness of the signature information, and he accepts the message |*P*〉 only if they match, and rejects the message |*P*〉 otherwise.

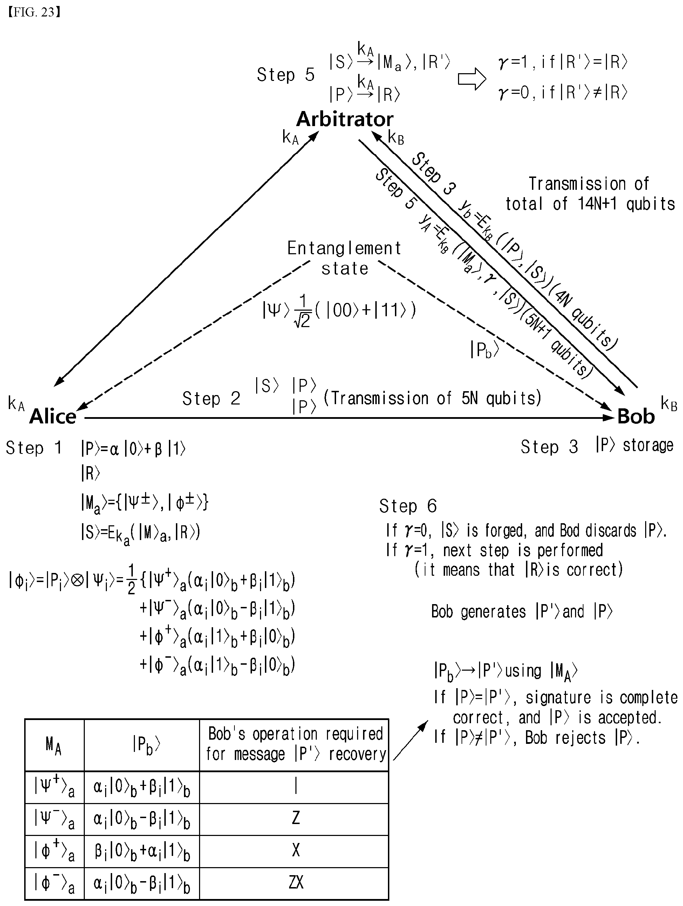

FIG. 23 illustrates an example of an arbitrator-based quantum signature scheme using an existing Bell state in a system applicable to the present disclosure.

The arbitrator-based quantum signature scheme using the triplet GHZ state introduced by G. Zeng in 2002 may also be generated using two photon entanglement states, such as the Bell state. FIG. 23 illustrates configuration of a scheme in which an entanglement quantum state shared by the arbitrator is transformed from a three-photon entanglement state to a two-photon entanglement state, and then the signature is executed in the same procedure.

The quantum signature described above must satisfy the following four characteristics.
① It must be impossible for a receiver or an attacker to forge the signature after the signature has been generated.
② The signer must not be able to deny the signature and the signed message, and the receiver must not be able to deny having received the message and the signature.
③ Each message must be assigned to a new signature and must not be separated from the signature.
④ The quantum signature must include quantum mechanical features.
   Ref. 1) Arbitrated quantum-signature scheme, Guihua Zeng and Christoph H. Keitel, Phys. Rev. A 65, 042312
   Ref. 2) Comment on "Arbitrated quantum-signature scheme" Marcos Curty and Norbert Lütkenhaus, Phys. Rev. A 77, 046301
   Ref. 3) Reply to "Comment on 'Arbitrated quantum-signature scheme' ", Guihua Zeng, Phys. Rev. A 78, 016301
   Ref. 4) Quantum signature method by arbitrator and system using the same (ETRI, 2014, KR20140060022A)
   Ref. 5) Quantum digital signatures, D Gottesman, I Chuang, arXiv preprint quant-ph/0105032, 2001

The symbols/abbreviations/terms used in the present disclosure are as follows.
- AQS: Arbitrated quantum signature
- GHZ state: Greenberger-Horne-Zeilinger state (quantum state in which three particles are entangled with correlation)
- Bell state: Quantum state in which two particles are entangled with correlation
- BSM: Bell state measurement
- |*P*〉: Qubit message
- |*S*〉: Quantum signature information
- |*Mₐ*〉: Alice's message qubit and measurement result of particle's Bell state transmitted to Alice in GHZ state
- |*M_{b}*〉: Measurement result of particles transmitted to Bob in GHZ state
- |*M_{A}*〉: Particle measurement result in arbitrator's GHZ state
- |*R*〉: Quantum state resulting from applying quantum one-time pad algorithm to message
- *γ*: Verification factor
- Arbitrator: Arbitrator (performing the role of assisting in verifying Bob's signature)
- QKD: Quantum key distribution

### Technical problem to be solved by various embodiments of the present disclosure

(1) In existing arbitrator-based signature schemes, since signature information generated undergoes a channel pass three times, it occupies the largest proportion of a total amount of transmitted information in a signature process. The signature information includes |***Mₐ***〉, which is a result of Bell state measurement, and |***R***〉, which is a transformed state of message qubits, and |*Mₐ*〉 occupies the largest proportion.
   Since quantum signature information generated by Alice passes through a quantum channel of Alice → Bob → arbitrator → Bob three times, it occupies the largest amount of transmitted information among all transmitted information. In particular, since |*Mₐ*〉 among the components constituting the signature information is a Bell state, if N messages are transmitted through the signature scheme, it occupies a transmission volume of 2N qubits. Therefore, it occupies 2/3 of the total transmission volume of 3N qubits for the signature information. Considering that encryption and decryption are performed every time to prevent exposure of all information disclosed through the channel in a quantum signature, a reduction in the amount of transmitted information can significantly improve computational load and throughput. Furthermore, since there is a possibility that an attacker could analyze symmetric key information by utilizing combinations of disclosed information to carry out attacks, such as forgery or repudiation, it is desirable to minimize the amount of transmitted information to reduce this risk as well.
(2) It is not easy to generate multi-photon entangled states, such as the GHZ state (there are difficulties in terms of economy, device, and implementation).
   Compared to single photon or bell state, which is commonly used in existing quantum information transmission, the GHZ state involves a correlation between three or more multi-photons. Therefore, using it for quantum information processing can bring many advantages, but it still has problems such as high implementation difficulty, complexity of device configuration, and high economic costs for production.
(3) In the existing arbitrator-based quantum signature scheme, the amount of transmitted qubit information that shall be exchanged between three parties consisting of a sender, a receiver, and an arbitrator is very large, leading to problems of large amounts of information transmission and computation, and an increased possibility of exposure of public information.

In order to transmit a message of N qubits, the existing signature scheme requires more than 10 times the amount of quantum information transmission. In addition, to prevent the exposure each time transmitting information, a process of encryption using a public key and a quantum one-time pad algorithm is required, and a receiving side also requires a process of returning information to its original state before encryption using a public key of a receiving unit and a decryption algorithm, which results in a problem where a large amount of computation is required for information processing. Furthermore, as the amount of public information transmitted through the channel at each step increases, there is a possibility that an attacker may infer key information that he/she need by using combinations of various public information. Therefore, it is necessary to minimize the amount of public information that shall be exchanged during the signature process.

### Configuration of various embodiments of the present disclosure

The present disclosure describes an efficient method capable of reducing an amount of transmitted information and an amount of resources used in an arbitrator-based quantum signature scheme. To this end, the present disclosure applies a method in which a result of BSM, which is the largest component among components constituting quantum signature information generated in the existing arbitrator-based quantum signature scheme and is not used in the process of being transmitted from Alice to the arbitrator via Bob, is generated separately as individual signature information without passing through Bob, and then is sent directly from Alice to the arbitrator. In addition, the present disclosure extends the existing triplet GHZ state-based quantum signature scheme to a two-photon entanglement-based quantum signature scheme such as the Bell state to maximize the effect of reducing information and resource usage.

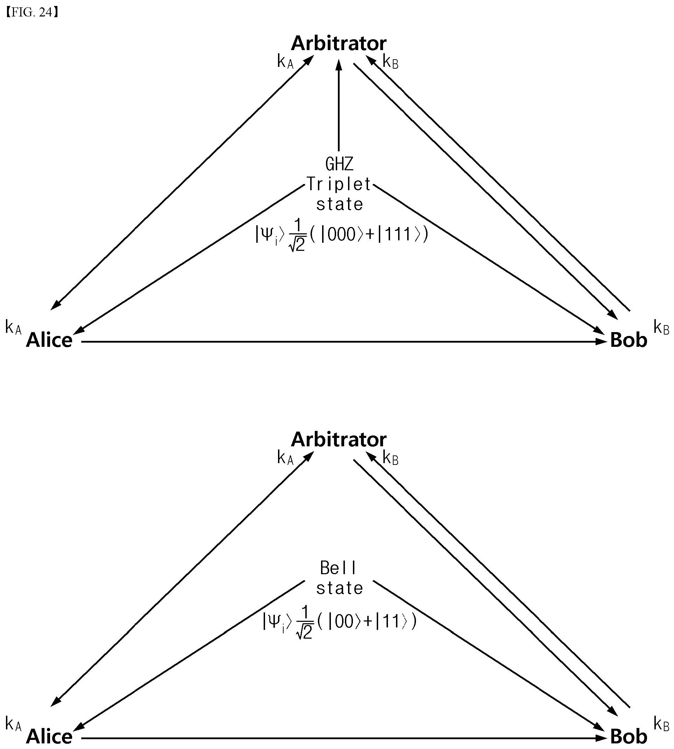

FIG. 24 illustrates an initial step of an arbitrator-based quantum signature scheme in a system applicable to the present disclosure.

The top of FIG. 24 illustrates an initial step of a GHZ state-based quantum signature scheme, and the bottom of FIG. 24 illustrates an initial step of a Bell state-based quantum signature scheme.

The entire quantum signature process presented in various embodiments of the present disclosure consists of three stages: an initial configuration step, a quantum signature generation step, and a verification step, and the detailed process is as follows.

### (1) Initial configuration step

In the quantum signature scheme considered in the present disclosure, as illustrated in FIG. 24, after an arbitrator generates N GHZ triplet states (or Bell states), which is the number of message qubits, when there is a request from Alice and Bob, who are a sender and a receiver, the arbitrator distributes them to Alice and Bob and proceed with the signature using a correlation between them. Alice and the arbitrator share a symmetric key *K_{A}* using QKD, and Bob and the arbitrator also pre-share *K_{B}* as the symmetric key.

### (2) Quantum signature splitting generation step:

The quantum signature step is performed in Alice, and N qubit messages |*P*〉=α|0〉+*β*|1) are first generated. Then, this is transformed into a different form of quantum state |*R*〉 using a quantum one-time pad algorithm, which can be done by applying the Z or X operator to |*P*〉 when *K_{A}* is 0 or 1, as shown in Equation below. [Equation 1] $\left|R\right〉 = {M}_{{k}_{A}} \left|P\right〉 = {X}^{{k}_{A}} {Z}^{{k}_{A} ⊖ 1} \left|P\right〉$

Next, Alice performs BSM on particles distributed to Alice, using her message qubit information |*P*〉 and the GHZ state (or Bell state) |*ψᵢ*〉.

In this case, if the arbitrator distributes the GHZ state, the measurement result is determined as one of the four Bell states, as can be seen in Equation below, and the measurement result is stored in |*Mₐ*〉*.* [Equation 2] $\left|{ϕ}_{i}\right〉 = \left|{P}_{i}\right〉 ⊗ \left|{ψ}_{i}\right〉 = \frac{1}{2} \left\{\begin{matrix}{\left|{ψ}^{+}\right〉}_{a} \left({α}_{i}{\left|00\right〉}_{Ab}+{β}_{i}{\left|11\right〉}_{Ab}\right) + {\left|{ψ}^{-}\right〉}_{a} \left({α}_{i}{\left|00\right〉}_{Ab}-β{\left|11\right〉}_{Ab}\right) \\ + {\left|{ϕ}^{+}\right〉}_{a} \left({α}_{i}{\left|11\right〉}_{Ab}+{β}_{i}{\left|00\right〉}_{Ab}\right) + {\left|{ϕ}^{-}\right〉}_{a} \left({β}_{i}{\left|00\right〉}_{Ab}-{α}_{i}{\left|11\right〉}_{Ab}\right)\end{matrix}\right\}$

If the arbitrator distributes the Bell states, the measurement result may be expressed as shown in Equation below. The measurement result is determined as one of the four Bell states, and is stored in |*Mₐ*〉*.* [Equation 3] $\left|{ϕ}_{i}\right〉 = \left|{P}_{i}\right〉 ⊗ \left|{ψ}_{i}\right〉 = \frac{1}{2} \left\{{\left|{ψ}^{+}\right〉}_{a}\left({α}_{i}{\left|0\right〉}_{A}+{β}_{i}{\left|1\right〉}_{A}\right)+{\left|{ψ}^{-}\right〉}_{a}\left({α}_{i}{\left|0\right〉}_{A}-{β}_{i}{\left|1\right〉}_{A}\right)\right.$

Next, Alice generates signature information |*S*₁〉 *= E_{kA}*(|*Mₐ*〉) to be transmitted directly to the arbitrator and signature information |*S*₂〉 *= E_{kA}*(|*R*〉) to be transmitted to Bob by splitting the signature information. Here, *E_{kA}* refers to an encryption process using a secret key shared by Alice and the arbitrator and the quantum one-time pad algorithm. Through this, it can significantly reduce the amount of quantum information transmitted compared to the existing scheme while transmitting the same |*Mₐ*〉 and |*R*〉 to the arbitrator.

Finally, Alice transmits two qubit messages |*P*〉 identical to |*S*₂〉 to Bob, and transmits |*S*₁〉 to the arbitrator.

### (3) Verification step:

### (3-1) Process performed by Bob:

Bob stores |*P*〉 among the received information for use in verification.

If the arbitrator is a quantum signature scheme that distributes the GHZ state, the next step is for Bob to measure the particles assigned to him among the GHZ state particles along the X-axis direction and store the result in |*Mₐ*〉*.* Equation below represents the state of the GHZ particles possessed by Bob and the arbitrator when Alice's measurement result is |*ψ*⁺〉ₐ. [Equation 4] ${\left|{ϕ}_{i}\right〉}_{Ab} = {α}_{i} {\left|00\right〉}_{Ab} + {β}_{i} {\left|11\right〉}_{Ab} = \frac{1}{√ 2} \left({α}_{i}{\left|0\right〉}_{A}+{β}_{i}{\left|1\right〉}_{A}\right) {\left|+x\right〉}_{b} + \frac{1}{√ 2} \left({α}_{i}{\left|0\right〉}_{A}-{β}_{i}{\left|1\right〉}_{A}\right) {\left|-x\right〉}_{b}$

Finally, Bob encrypt |*M_{b}*〉, |*P*〉, and |*S*〉 using the secret symmetric key *K_{B}* possessed by Bob and the arbitrator. [Equation 5] ${y}_{b} = {k}_{b} \left(\left|{M}_{b}\right〉, \left|P\right〉, \left|S\right〉\right)$

If the arbitrator is a quantum signature scheme that distributes the bell state, the next step is for Bob to encrypt the remaining received information using the secret symmetric key *K_{B}* possessed by Bob and the arbitrator, and then transmit it to the arbitrator. [Equation 6] ${y}_{b} = {k}_{B} \left(\left|P\right〉, \left|{S}_{2}\right〉\right)$

### (3-2) Process performed by arbitrator:

The arbitrator decrypts |*S*₁〉 received from Alice using *k_{A}* to obtain |*Mₐ*〉. Next, the arbitrator performs a decryption process using *K_{B}* on *y_{b}* received from Bob. Next, the arbitrator decrypts |*S*₂〉 = *k_{A}*(|*R*〉) using *k_{A}* to obtain |*R'*〉, which is the component of the signature information. Then, the arbitrator applies the quantum one-time pad algorithm *X^{kA}Z*^{*kA*⊖1} to |*P*〉 to obtain |*R*〉. The arbitrator checks whether |*R'*〉 and |*R*〉 match each other using an operation that measures the quantum state, such as a controlled swap operation. If |*R*'〉 and |*R*〉 match, the arbitrator records y=1, otherwise, y=0.

If the arbitrator is a quantum signature scheme that distributes the GHZ state, the arbitrator then encrypts its own GHZ state particles |*P_{A}*〉 using *K_{B}* along with parameters to be used for verification obtained earlier, without any separate processing, and transmits them to Bob. [Equation 7] ${y}_{A} = {k}_{b} \left(\left|{M}_{a}\right〉,\left|{M}_{b}\right〉, γ, \left|{P}_{A}\right〉, \left|{S}_{2}\right〉\right)$

However, if the arbitrator is a quantum signature scheme that distributes the Bell state, the arbitrator estimates the Bell state particles |*P_{A}*〉 assigned to the arbitrator using a correlation between |*Mₐ*〉 and the Bell state, and then performs an operation for deriving |*P'*〉. Table 3 summarizes appropriate operators for deriving |*P'*〉 based on the state of |*P_{A}*〉.

**[Table 3]**

| \|***Mₐ***〉 | \|***P_{A}***〉 | Arbitrator' operation to obtain \|*P*'〉 |
|---|---|---|
| \|*ψ⁺*〉*ₐ* | *αᵢ*\|0〉*_{A}+βᵢ*\|1〉*_{A}* | I |
| \|*ψ*⁻〉*ₐ* | *αᵢ*\|0〉*_{A} - βᵢ*\|1〉*_{A}* | Z |
| \|*ϕ*⁺〉*ₐ* | *αᵢ*\|1〉*_{A}+βᵢ*\|0〉*_{A}* | X |
| \|*ϕ⁻*〉*ₐ* | *αᵢ*\|1〉*_{A} - βᵢ*\|0〉*_{A}* | XZ |

Finally, the arbitrator encrypts the information *K_{B}* required by Bob in the final verification process into *K_{B}* and transmits it to Bob. [Equation 8] ${y}_{A} = {E}_{{k}_{B}} \left(\left|P′\right〉, γ ,\left|{S}_{2}\right〉\right)$

### (3-3) Process performed by Bob:

Bob performs a decryption process using *K_{B}* on the received *y_{A}* to obtain parameters used for verification.

Based on the received parameters, Bob first checks whether y is 0 or 1 to check whether |*S*〉 is forged. If γ=0, it means that |*R*〉 among the components constituting the signature has been forged. In other words, since this implies a forgery of the signature, |*P*〉 is discarded. On the other hand, if y=1, it means that |*R*〉 is correct, and thus the next verification process is performed. However, since this verification process only confirms that some of the signature information is correct but not completely correct, an additional verification process is required.

If the arbitrator is a quantum signature scheme that distributes the GHZ state, in the next verification process, Bob requires reasoning process of determining what appropriate operator is necessary to match the state of the GHZ state particles |*P_{A}*〉 transmitted to Bob by the arbitrator with |*P*〉. In this process, Bob uses the received |*M_{b}*〉 and |*Mₐ*〉 to estimate a state of the GHZ state particles distributed to the arbitrator, and based on this, derives |*P'*〉 by applying an operator for matching the state of |*P_{A}*〉 with |*P*〉. Table 4 below summarizes appropriate operators for deriving |*P'*〉 based on the state of *P_{A}*〉.

**[Table 4]**

| *Mₐ* | *M_{b}* | \|***P_{A}***〉 | Bob's operation required for message recovery |
|---|---|---|---|
| \|*ψ⁺*〉*ₐ* | \|+x〉 | *αᵢ*\|0〉*_{A} + βᵢ*\|1〉*_{A}* | I |
| \|*ψ⁺*〉*ₐ* | \|-x〉 | *αᵢ*\|0〉*_{A} - βᵢ*\|1〉*_{A}* | Z |
| \|*ψ*⁻〉*ₐ* | \|+x〉 | *αᵢ*\|0〉*_{A} - βᵢ*\|1〉*_{A}* | Z |
| \|*ψ⁻*〉*ₐ* | \|-x〉 | *αᵢ*\|0〉*_{A} + βᵢ*\|1〉*_{A}* | I |
| \|*ϕ*⁺〉*ₐ* | \|+x〉 | *αᵢ*\|0〉*_{A} + βᵢ*\|1〉*_{A}* | X |
| \|*ϕ*⁺〉*ₐ* | \|-x〉 | *αᵢ*\|0〉*_{A} - βᵢ*\|1〉*_{A}* | XZ |
| \|*ϕ*⁻〉*ₐ* | \|+x〉 | *αᵢ*\|0〉*_{A} - βᵢ*\|1〉*_{A}* | XZ |
| \|*ϕ⁻*〉*ₐ* | \|-x〉 | *αᵢ*\|0〉*_{A} + βᵢ*\|1〉*_{A}* | X |

If Bob derives |*P*'〉, Bob verifies whether the qubit message |*P*〉 stored by Bob matches |*P'*〉 derived by Bob with the help of the arbitrator. If |*P*〉 = |*P*'〉, Bob accepts the qubit message |*P*〉 because the signature information |*S*〉 can be guaranteed to be completely correct. However, if |*P*〉 ≠ |*P*'〉, Bob rejects |*P*〉 because the signature information is inconsistent.

If the arbitrator is a quantum signature scheme that shares the Bell state, a second verification is performed immediately. To do this, Bob uses |*P*〉 stored by Bob and |*P*'〉 received from the arbitrator to verify whether two information *P*〉 and |*P*'〉 match. The acceptance of the message qubit is then determined by verifying the signature match using the same procedure as when using the GHZ state described above.

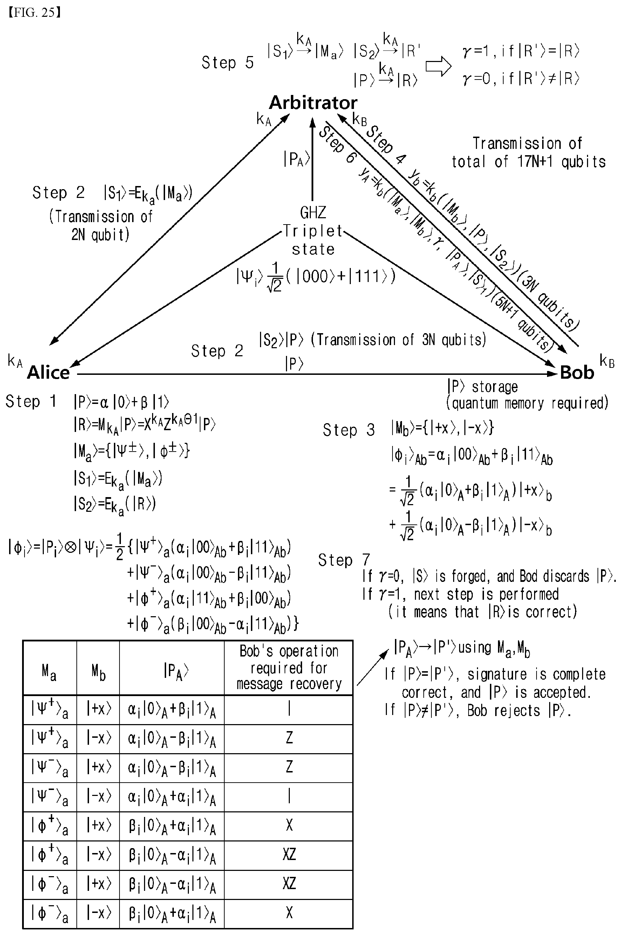

FIG. 25 illustrates an example of an arbitrator-based quantum signature scheme using a GHZ state in a system applicable to the present disclosure.

FIG. 25 illustrates the overall configuration diagram when the signature information splitting scheme presented in the present disclosure is applied to the arbitrator-based quantum signature scheme using the GHZ state; the operations performed in the transmitter, the receiver, and the arbitrator; and the information exchanged between them. Step 1 of FIG. 25 corresponds to the signature information generation process, and the remaining steps 2 to 7 correspond to the signature verification process. As can be seen in the processes, in the scheme according to the present disclosure, Alice splits the quantum signature information, which occupies the largest proportion in terms of information transmission amount, divides it into efficient paths for transmission, and then aggregates it at the arbitrator and provides the parameters required for the verification procedure to Bob, and Bob proceeds with the two-stage signature verification procedure based on the provided verification parameters.

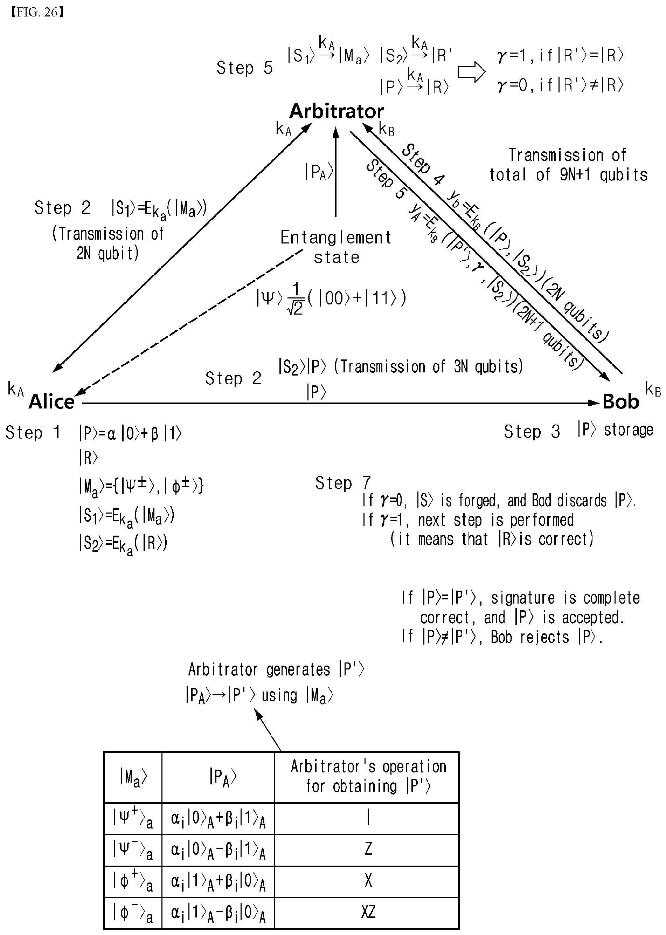

FIG. 26 illustrates an example of an arbitrator-based quantum signature scheme using a Bell state in a system applicable to the present disclosure.

FIG. 26 illustrates the overall configuration and information transmission flow of a scheme applying the Bell state, which has lower complexity and is advantageous for implementation, instead of the GHZ state in the proposed arbitrator-based quantum signature scheme. In various embodiments of the present disclosure, the Bell state is shared between Alice and the arbitrator, and verification parameters required for the verification process are generated using the correlation between the two.

The embodiments have considered that all information is transmitted in a quantum state and encryption/decryption is performed using the quantum one-time pad algorithm. However, the parts presented in Table 5 below can also be transmitted as classical information. And if the following three pieces of information are transmitted as classical information during the encryption/decryption process, the existing cryptographic scheme may be applied.

**[Table 5]**

| Quantum Information | Classical Information |
|---|---|
| **\|*Mₐ*〉** | *Mₐ*: Distinguishable by 2 bits of classical information |
| \|***M_{b}***〉 | *M_{b}*: Distinguishable by 1 bit of classical information |
| *γ* : Represented as 1 qubit | y : Transmitted as 1 bit |

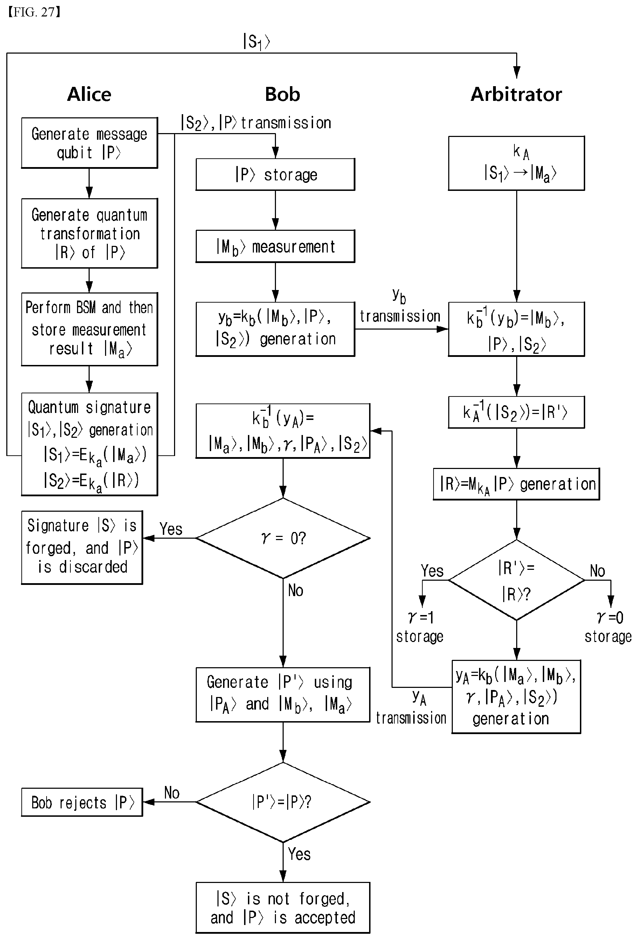

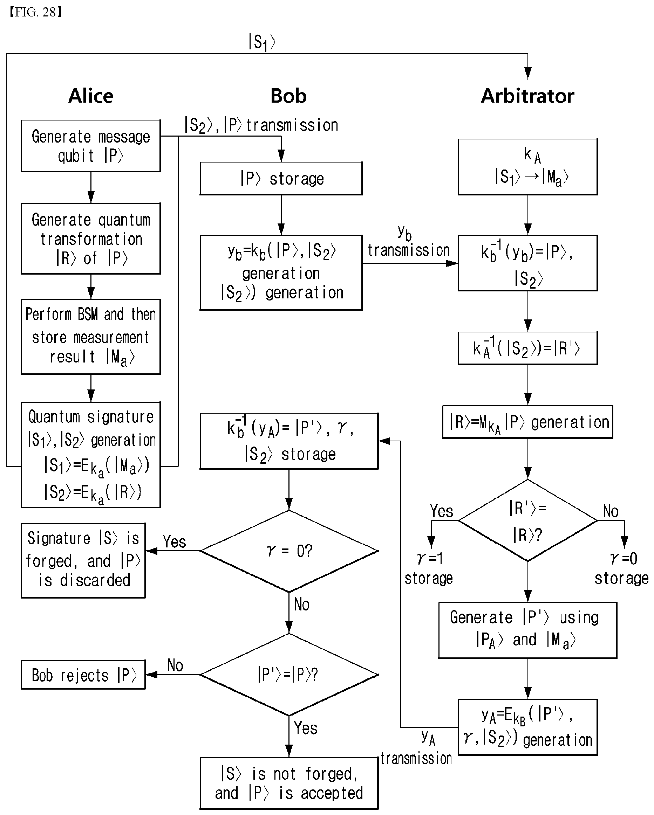

FIGS. 27 and 28 illustrate the overall flowchart of the proposed scheme described in detail above. Alice first generates signature information and a message, Bob performs the role of a verifier, and the arbitrator generates verification factors to assist Bob in verification and performs the role of verifying non-repudiation, forgery, etc. First, FIG. 27 illustrates the flowchart of the proposed arbitrator-based quantum signature scheme based on the GHZ state.

**FIG.** 27 illustrates a flowchart of an arbitrator-based quantum signature scheme using a GHZ state in a system applicable to the present disclosure.

Referring to FIG. 27, Alice first generates N qubit messages |*P*〉=α|0〉+*β*|1〉.

Alice transforms |*P*〉 into a different form of quantum state |*R*〉 using a quantum one-time pad algorithm.

Alice performs BSM on particles distributed to Alice using her message qubit information |*P*〉 and GHZ state |*ψᵢ*〉. A measurement result of the BSM is stored in |*Mₐ*〉.

Alice generates signature information |*S*₁〉 *= E_{kA}*(|*Mₐ*〉) to be transmitted directly to the arbitrator and signature information |*S*₂〉 *= E_{kA}*(|*R*〉) to be transmitted to Bob by splitting the signature information.

Alice transmits two qubit messages |*P*〉 identical to |*S*₂〉 to Bob, and transmits |*S*₁〉 to the arbitrator.

Bob stores |*P*〉 among the received information for use in verification.

Bob measures particles assigned to him among GHZ state particles along the X-axis direction and stores the result in |*M_{b}*〉.

Bob generates *y_{b}*=*k_{b}* (|*M_{b}*〉, |*P*〉, |*S*〉).

Bob transmits *y_{b}* to the arbitrator.

The arbitrator decrypts |*S*₁〉 received from Alice using *k_{A}* to obtain |*Mₐ*〉. Next, the arbitrator performs a decryption process using *K_{B}* on *y_{b}* received from Bob. Next, the arbitrator decrypts |*S*₂〉 = *k_{A}*(|*R*〉) using *k_{A}* to obtain |*R'*〉, which is a component of signature information. Then, the arbitrator applies the quantum one-time pad algorithm *X^{kA}Z*^{*kA*⊖1} to |*P*〉 to obtain |*R*〉. The arbitrator checks whether |*R*'〉 and |*R*〉 match each other using an operation that measures the quantum state, such as a controlled swap operation. If |*R*'〉 and |*R*〉 match, the arbitrator records y=1, otherwise, y=0.

The arbitrator generates *y_{A}=k_{b}* (|*Mₐ*〉,|*M_{b}*〉, *γ,* |*P_{A}*〉, |*S*₂〉)*.*

The arbitrator transmits *y_{A}* to Bob.

Bob performs a decryption process using *K_{B}* on the received *y_{A}* to obtain parameters used for verification.

Based on the received parameters, Bob first checks whether y is 0 or 1 to check whether |*S*〉 is forged. If *y*=0, it means that |*R*〉 among the components constituting the signature has been forged. In other words, since this implies a forgery of the signature, |*P*〉 is discarded. On the other hand, if y=1, it means that |*R*〉 is correct, and thus the next verification process is performed. However, since this verification process only confirms that some of the signature information is correct but not completely correct, an additional verification process is required.

Bob uses the received |*M_{b}*〉 and |*Mₐ*〉 to estimate a state of the GHZ state particles distributed to the arbitrator, and based on this, derives |*P'*〉 by applying an operator for matching the state of |*P_{A}*〉 with |*P*〉.

If Bob derives |*P*'〉, Bob verifies whether the qubit message |*P*〉 stored by Bob matches |*P'*〉 derived by Bob with the help of the arbitrator.

If |*P*〉 = IP'), Bob accepts the qubit message |*P*〉 because the signature information |*S*〉 can be guaranteed to be completely correct. However, if |*P*〉 ≠ |*P*'〉, Bob rejects |*P*〉 because the signature information is inconsistent.

**FIG.** 28 illustrates a flowchart of an arbitrator-based quantum signature scheme using a Bell state in a system applicable to the present disclosure.

Referring to FIG. 28, Alice first generates N qubit messages |*P*〉=*α*|0〉+*β*|1〉.

Alice transforms |*P*〉 into a different form of quantum state |*R*〉 using a quantum one-time pad algorithm.

Alice performs BSM on particles distributed to Alice using her message qubit information |*P*〉 and Bell state |*ψᵢ*〉. A measurement result of the BSM is stored in |*Mₐ*〉.

Alice generates signature information |*S*₁〉 *= E_{kA}*(|*Mₐ*〉) to be transmitted directly to the arbitrator and signature information |*S*₂〉 *= E_{kA}*(|*R*〉) to be transmitted to Bob by splitting the signature information.

Alice transmits two qubit messages |*P*〉 identical to |*S*₂〉 to Bob, and transmits |*S*₁〉 to the arbitrator.

Bob stores |*P*〉 among the received information for use in verification.

Bob generates *y_{b}*=*k_{B}* (|*P*〉, |*S₂*〉)*,*

Bob transmits *y_{b}* to the arbitrator.

The arbitrator decrypts |*S*₁〉 received from Alice using *k_{A}* to obtain |*Mₐ*〉. Next, the arbitrator performs a decryption process using *K_{B}* on *y_{b}* received from Bob. Next, the arbitrator decrypts |*S*₂〉 = *k_{A}*(|*R*〉) using *k_{A}* to obtain |*R'*〉, which is a component of signature information. Then, the arbitrator applies the quantum one-time pad algorithm *X^{kA}Z*^{*kA*⊖1} to |*P*〉 to obtain |*R*〉. The arbitrator checks whether |*R*'〉 and |*R*〉 match each other using an operation that measures the quantum state, such as a controlled swap operation. If |*R*'〉 and |*R*〉 match, the arbitrator records y=1, otherwise, y=0.

The arbitrator estimates the Bell state particles |*P_{A}*〉 assigned to the arbitrator using a correlation between |*Mₐ*〉 and the Bell state, and then performs an operation for deriving |*P'*〉.

The arbitrator generates *yₐ*=*E_{kB}*(|*P'*〉*, γ*,|*S*₂〉).

The arbitrator transmits *y_{A}* to Bob.

Bob performs a decryption process using *K_{B}* on the received *y_{A}* to obtain parameters used for verification.

Based on the received parameters, Bob first checks whether y is 0 or 1 to check whether |*S*〉 is forged. If *γ*=0, it means that |*R*〉 among the components constituting the signature has been forged. In other words, since this implies a forgery of the signature, |*P*〉 is discarded. On the other hand, if y=1, it means that |*R*〉 is correct, and thus the next verification process is performed. However, since this verification process only confirms that some of the signature information is correct but not completely correct, an additional verification process is required.

Bob uses |*P*〉 stored by Bob and |*P*'〉 received from the arbitrator to verify check whether two information P) and |*P'*〉 match.

If |*P*〉 *=* |*P'*〉, Bob accepts the qubit message |*P*〉 because the signature information |*S*〉 can be guaranteed to be completely correct. However, if |*P*〉 ≠ |*P'*〉, Bob rejects |*P*〉 because the signature information is inconsistent.

### Security Analysis

The security of the arbitrator-based quantum signature scheme presented in the present disclosure is analyzed. Two conditions required to ensure security in a quantum signature are signature unforgeability and non-repudiation of the transmitter and the receiver.

### (1) Unforgeability

If a malicious Bob attempts to forge Alice's signature |*S*₂〉 = E_{kA}(|R〉), he needs to know a secret symmetric key *k_{A}.* However, since *k_{A}* is distributed only between Alice and an arbitrator through QKD based on quantum mechanics, it is impossible for Bob to obtain exact information of the key. Consequently, the arbitrator cannot generate correct |*R*〉, and thus a first verification step cannot be passed.

Next, if an attacker Eve attempts to forge the Alice's signature, Eve can obtain public information |S₂〉, |P〉, y_{b}, and y_{A}. However, since information on *k_{A}* and k_{B} required for signature forgery is not leaked from the public information, signature forgery is impossible.

If the secret symmetric key *k_{A}* is exposed and Eve attempts to forge the signature, even if Eve knows *k_{A}*, she cannot generate a Bell state measurement result |*Mₐ*〉 identical to that of the correct Alice from a newly generated message. Therefore, condition |*P*〉 = |*P*'〉 used in a second verification process cannot be satisfied, making the forgery of the signature information impossible.

### (2) Non-repudiation

If Alice claims that she never sent signature information, the arbitrator can determine that signature information is originated from Alice by utilizing the fact that a secret key *k_{A}* possessed only by Alice and the arbitrator is included in the signature information received by the arbitrator. Hence, non-repudiation of a sender is possible.

Furthermore, if Bob claims that he never received the signature, signature verification requires a receiver to obtain the signature and exchange it with the arbitrator who shares the same secret key *k_{B}.* Therefore, if the verification is complete, it must be assumed that Bob definitely received the signature and delivered the signature to the arbitrator. Hence, non-repudiation of the receiver is also possible.

### Effects of various embodiments of the present disclosure

Various embodiments of the present disclosure propose an arbitrator-based quantum signature scheme using Triplet GHZ state and Bell state. First, through a comparison between the proposed scheme and the existing arbitrator-based quantum scheme in terms of the amount of qubit information transmitted between Alice, Bob, and the arbitrator, results shown in Table 6 below can be obtained, and the amount of information transmitted is compared based on the situation where an N-qubit message is transmitted.

**[Table 6]**

| Transmission path | AQS with GHZ states (Comparison scheme 1) | Proposed scheme with GHZ state | AQS with Bell states (Comparison scheme 2) | Proposed scheme with Bell state |
|---|---|---|---|---|
| Alice→Bob | 5N | 3N | 5N | 3N |
| Bob→Arbitrator | 5N | 3N | 4N | 2N |
| Arbitrator→Bob | 7N+1 | 5N+1 | 5N+1 | 2N+1 |
| Alice→Arbitrator | - | 2N | - | 2N |
| Total | 17N+1 | 13N+1 | 14N+1 | 9N+1 |

The reduction in the transmission amount is caused by the splitting of the signature information. The transmission amount was improved by applying a method in which Alice directly transmits, to the arbitrator, the BSM result state, which occupies the largest proportion of signature information passing through the existing quantum channel three times, thereby improving the fact that the measurement results when passing through the quantum channel twice are further transmitted.

Next, the complexity in terms of system configuration resources is compared. To this end, the complexity in terms of resource usage is compared between the existing method based on the GHZ state and the Bell state-based method of the present disclosure.

**[Table 7]**

| Complexity | AQS with triplet GHZ state (Comparison scheme) | AQS with two qubits entanglement state (Proposed scheme) |
|---|---|---|
| Entangled qubit usage | N triplet GHZ states (Method using entanglement state of three photons) | N two qubits entanglements states (Relatively easy to implement as it uses entanglement state of two photons) |
| Number of Bell measurements | N times | N times |
| Number of X measurements | N times | 0 times |

The characteristic configurations of various embodiments of the present disclosure are as follows.

Various embodiments of the present disclosure deal with a scheme that can reduce the amount of quantum qubit information transmitted and minimize resource usage through the path splitting of quantum signature information in an arbitrator-based quantum signature scheme and the application of two-photon entangled qubits instead of the existing GHZ state, and the following are the main configurations.
(1) A step in which Alice splits, generates, and transmits quantum signature information to minimize an amount of information transmitted comprises:
   a step of generating signature information |*S*₁〉 *= E_{kA}*(|*Mₐ*〉) for Alice to transmit directly to an arbitrator;
   a step of transmitting the signature information generated in the above step directly to the arbitrator;
   a step of generating signature information |*S*₂〉 *= E_{kA}*(|*R*〉) for Alice to transmit to Bob; and
   a step of transmitting the signature information |*S*₂〉 generated in the above step and a message |*P*〉 to Bob.
(2) In order for the arbitrator to minimize the amount of information transmitted and configuration resources in a signing process;
   a step in which the arbitrator changes a GHZ state to be pre-shared only between Alice and the arbitrator, instead of sharing it among three parties in an initial step of signing, to a Bell state that has lower configuration complexity and ease of implementation;
   a step in which the arbitrator decrypts the signature information |*S*₁〉 received from Alice using a symmetric key *k_{A}* to obtain *Mₐ*;
   a step in which the arbitrator obtains the signature information |*S*₂〉 received from Bob through decryption based on a symmetric key *k_{B}* and then proceeds with decryption based on *k_{A}* to obtain |*R*'〉*;*
   a step in which the arbitrator generates |*P'*〉 to be used in a second signature verification using arbitrator's own Bell state particles |*P_{A}*〉 and |*Mₐ*〉;
(3) A step of transmitting verification parameters *y_{A}*=*E_{kB}*(|*P*'〉*, γ* ,|*S*₂〉) generated by the arbitrator in the steps (1) and (2) to Bob;

### [Description of claims related to second node]

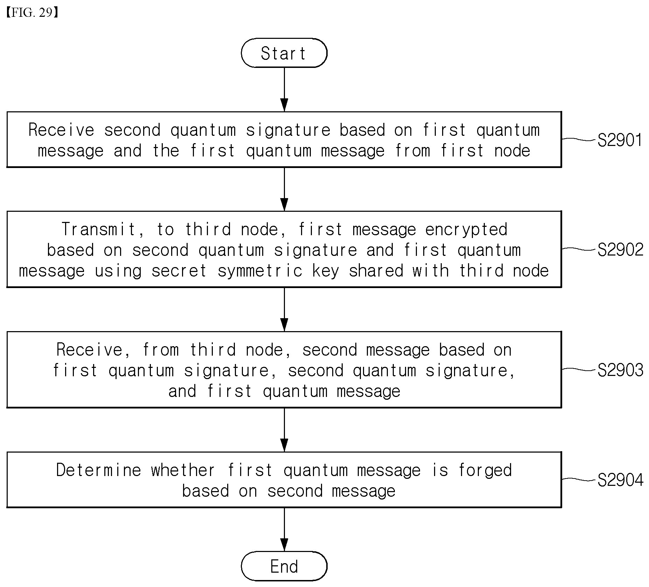

Below, the above-described embodiments are described in detail from an operation perspective of a second node with reference to FIG. 29. Methods to be described below are merely distinguished for convenience of explanation. Thus, as long as the methods are not mutually exclusive, it is obvious that partial configuration of any method can be substituted or combined with partial configuration of another method.

FIG. 29 illustrates an example of an operation process of a second node in a system applicable to the present disclosure.

According to various embodiments of the present disclosure, there is provided a method performed by a second node in a communication system.

According to various embodiments of the present disclosure, a first node, a second node, a third node, and each of multiple nodes may correspond to either a user equipment (UE) or a base station in a wireless communication system.

An embodiment of FIG. 29 may comprise, before step S2901, one or more of a step in which a second node receives one or more synchronization signals from a first node; a step in which the second node receives system information from the first node; a step in which the second node receives configuration information from the first node; and a step in which the second node receives control information from the first node.

The embodiment of FIG. 29 may further comprise, before the step S2901, one or more of a step in which the second node transmits a random access preamble to the first node; a step in which the second node receives a random access response (RAR) from the first node; a step in which the second node transmits a random access message 3 to the first node; and a step in which the second node receives a contention resolution message from the first node. The message 3 is a first PUSCH transmission scheduled by the RAR together with an RAR UL grant.

In the step S2901, the second node receives, from the first node, a second quantum signature based on a first quantum message and the first quantum message. Signature information related to the first quantum message is divided into a first quantum signature and the second quantum signature, and the first quantum signature is transmitted from the first node to a third node.

In step S2902, the second node transmits, to the third node, a first message encrypted based on the second quantum signature and the first quantum message using a secret symmetric key shared with the third node.

In step S2903, the second node receives, from the third node, a second message based on the first quantum signature, the second quantum signature, and the first quantum message.

In step S2904, the second node determines whether the first quantum message is forged based on the second message.

According to various embodiments of the present disclosure, the first quantum signature may be related to a Bell state measurement result for the quantum message. The first quantum signature may be transmitted directly from the first node to the third node without passing through the second node.

According to various embodiments of the present disclosure, the second message may be based on a Bell state measurement result decrypted based on a first symmetric key from the first quantum signature, a transformed quantum state decrypted based on a second symmetric key from the second quantum signature, and a correlation of the Bell state measurement result.

According to various embodiments of the present disclosure, the second quantum signature may be related to a quantum state transformed based on a quantum one-time pad algorithm for the quantum message.

According to various embodiments of the present disclosure, the embodiment of FIG. 29 may further comprise, based on it being determined that the first quantum signature or the second quantum signature is forged based on the second message, discarding the first quantum message based on forgery of the first quantum message.

According to various embodiments of the present disclosure, the embodiment of FIG. 29 may further comprise, based on it being determined that the first quantum signature or the second quantum signature is not forged based on the second message, determining whether the first quantum message is forged based on whether the first quantum message matches a second quantum message decrypted from the second message.

According to various embodiments of the present disclosure, the second quantum message may be based on a Bell state of the third node estimated based on the correlation of the Bell state measurement result.

According to various embodiments of the present disclosure, there is provided a second node in a communication system. The second node may include a transceiver and at least one processor, and the at least one processor may be configured to perform the operation method of the second node based on FIG. 29.

According to various embodiments of the present disclosure, there is provided a device controlling a second node in a communication system. The device may include at least one processor and at least one memory operably connected to the at least one processor. The at least one memory may be configured to store instructions performing the operation method of the second node based on FIG. 29 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the second node based on FIG. 29.

### [Description of claims related to third node]

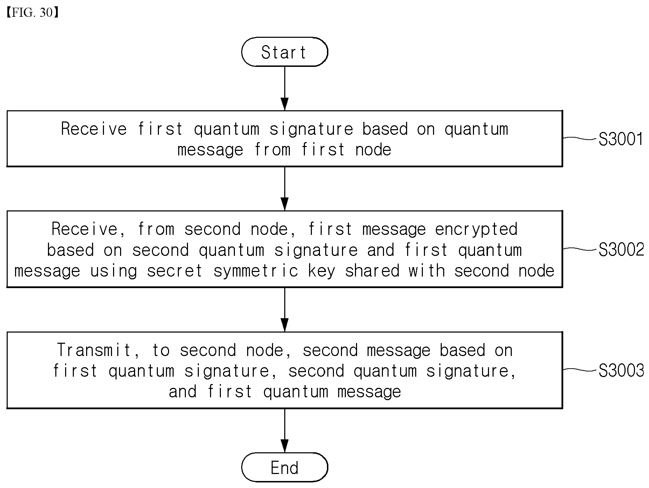

Below, the above-described embodiments are described in detail from an operation perspective of a third node with reference to FIG. 30. Methods to be described below are merely distinguished for convenience of explanation. Thus, as long as the methods are not mutually exclusive, it is obvious that partial configuration of any method can be substituted or combined with partial configuration of another method.

FIG. 30 illustrates an example of an operation process of a third node in a system applicable to the present disclosure.

According to various embodiments of the present disclosure, there is provided a method performed by a third node in a communication system.

According to various embodiments of the present disclosure, a first node, a second node, a third node, and each of multiple nodes may correspond to either a user equipment (UE) or a base station in a wireless communication system.

An embodiment of FIG. 30 may comprise, before step S3001, one or more of a step in which a third node receives one or more synchronization signals from a first node; a step in which the third node receives system information from the first node; a step in which the third node receives configuration information from the first node; and a step in which the third node receives control information from the first node.

The embodiment of FIG. 30 may further comprise, before the step S3001, one or more of a step in which the third node transmits a random access preamble to the first node; a step in which the third node receives a random access response (RAR) from the first node; a step in which the third node transmits a random access message 3 to the first node; and a step in which the third node receives a contention resolution message from the first node. The message 3 is a first PUSCH transmission scheduled by the RAR together with an RAR UL grant.

In the step S3001, the third node receives a first quantum signature based on a quantum message from the first node. Signature information related to the quantum message is divided into the first quantum signature and a second quantum signature, and the second quantum signature is transmitted from the first node to a second node.

In step S3002, the third node receives, from the second node, a first message encrypted based on the second quantum signature and a first quantum message using a secret symmetric key shared with the second node.

In step S3003, the third node transmits, to the second node, a second message based on the first quantum signature, the second quantum signature, and the first quantum message. Based on the second message, it is determined whether the first quantum message is forged.

According to various embodiments of the present disclosure, the first quantum signature may be related to a Bell state measurement result for the quantum message. The first quantum signature may be transmitted directly from the first node to the third node without passing through the second node.

According to various embodiments of the present disclosure, the second message may be based on a Bell state measurement result decrypted based on a first symmetric key from the first quantum signature, a transformed quantum state decrypted based on a second symmetric key from the second quantum signature, and a correlation of the Bell state measurement result.

According to various embodiments of the present disclosure, the second quantum signature may be related to a quantum state transformed based on a quantum one-time pad algorithm for the quantum message.

According to various embodiments of the present disclosure, based on it being determined that the first quantum signature or the second quantum signature is forged based on the second message, the first quantum message may be discarded based on forgery of the first quantum message. According to various embodiments of the present disclosure, based on it being determined that the first quantum signature or the second quantum signature is not forged based on the second message, whether the first quantum message is forged may be determined based on whether the first quantum message matches a second quantum message decrypted from the second message.

According to various embodiments of the present disclosure, the second quantum message may be based on a Bell state of the third node estimated based on the correlation of the Bell state measurement result.

According to various embodiments of the present disclosure, there is provided a third node in a communication system. The third node may include a transceiver and at least one processor, and the at least one processor may be configured to perform the operation method of the third node based on FIG. 30.

According to various embodiments of the present disclosure, there is provided a device controlling a third node in a communication system. The device may include at least one processor and at least one memory operably connected to the at least one processor. The at least one memory may be configured to store instructions performing the operation method of the third node based on FIG. 30 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the third node based on FIG. 30.

### Communication system applicable to the present disclosure

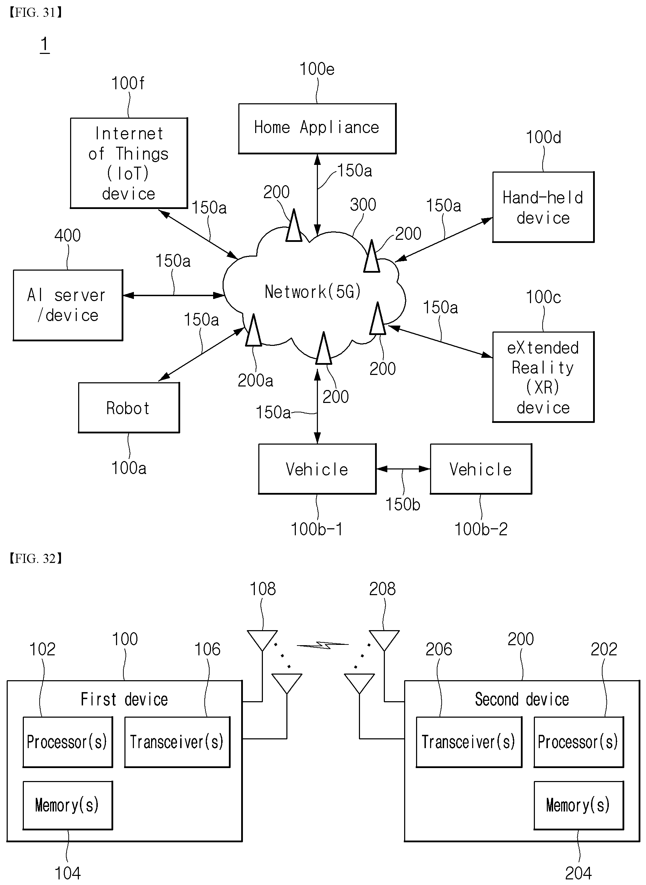

FIG. 31 illustrates a communication system 1 applied to various embodiments of the present disclosure.

Referring to FIG. 31, a communication system 1 applied to various embodiments of the present disclosure includes a wireless device, a base station, and a network. Herein, the wireless device refers to a device performing communication using Radio Access Technology (RAT) (e.g., 5G New RAT (NR)) or Long-Term Evolution (LTE), 6G wireless communication) and may be referred to as communication/radio/5G device/6G device. Although not limited thereto, the wireless devices may include a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BS and the network may be implemented as wireless devices and a specific wireless device 200a may operate as a BS/network node with respect to other wireless devices.

The wireless devices 100a to 100f may be connected to the network 300 via the BS 200. An Artificial Intelligence (AI) technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network, or 6G network. Although the wireless devices 100a to 100f may communicate with each other through the BS 200/network 300, the wireless devices 100a to 100f may perform direct communication (e.g., sidelink communication) with each other without passing through the BS/network. For example, the vehicles 100b-1 and 100b-2 may perform direct communication (e.g. Vehicle-to-Vehicle (V2V)/Vehicle-to-everything (V2X) communication). Additionally, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BS/the wireless device, the base station and the base station may transmit/receive radio signals to/from each other through the wireless communication/connections 150a, 150b, and 150c. For example, the wireless communication/connections 150a, 150b, and 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

NR supports multiple numerology (or subcarrier spacing (SCS)) to support various 5G services. For example, when SCS is 15kHz, it supports a wide area in traditional cellular bands, and when SCS is 30kHz/60kHz, it supports dense-urban, lower latency, and wider carrier bandwidth, when SCS is 60kHz or higher, it supports bandwidth greater than 24.25GHz to overcome phase noise.

The NR frequency band can be defined as two types of frequency ranges (FR1, FR2). The values of the frequency range may be changed, for example, and the frequency ranges of the two types (FR1, FR2) may be as shown in Table 8 below. For convenience of explanation, among the frequency ranges used in the NR system, FR1 may mean "sub 6GHz range", and FR2 may mean "above 6GHz range" and may be called millimeter wave (mmW).

**[Table 8]**

| Frequency Range Designation | Corresponding Frequency Range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system can be changed. For example, FR1 may include a band of 410 MHz to 7125 MHz as shown in Table 9 below. That is, FR1 may include a frequency band of 6GHz (or 5850, 5900, 5925 MHz, etc.). For example, the frequency band above 6 GHz (or 5850, 5900, 5925 MHz, etc.) included within FR1 may include an unlicensed band. Unlicensed bands can be used for a variety of purposes, for example, for communications for vehicles (e.g., autonomous driving).

**[Table 9]**

| Frequency Range Designation | Corresponding Frequency Range | Subcarrier Spacing |
|---|---|---|
| FR1 | 41MHz-7125MHz | 15, 30, 60kHz |
| FR2 | 24250MHz-52600MHz | 60, 120, 240kHz |

According to various embodiments of the present disclosure, the communication system 1 may support terahertz (THz) wireless communication. THz wireless communication uses wireless communication using THz waves with a frequency of approximately 0.1 to 10 THz (1 THz = 1012 Hz), and can refer to terahertz (THz) band wireless communication using a very high carrier frequency of 100 GHz or higher. The frequency band expected to be used for THz wireless communication may be the D-band (110GHz to 170GHz) or H-band (220GHz to 325GHz) bands, which have small propagation losses due to absorption of molecules in the air.

### Wireless device applicable to the present disclosure

Examples of a wireless device to which various embodiments of the present disclosure are applied are described below.

FIG. 32 illustrates a wireless device applicable to various embodiments of the present disclosure.

Referring to FIG. 32, a first wireless device 100 and a second wireless device 200 may transmit and receive radio signals through various wireless access technologies (e.g., LTE and NR). {The first wireless device 100 and the second wireless device 200} may correspond to {the wireless device 100x and the base station 200} and/or {the wireless device 100x and the wireless device 100x} of FIG. 31.

The first wireless device 100 may include one or more processors 102 and one or more memories 104 and may further include one or more transceivers 106 and/or one or more antennas 108. The processor 102 may control the memory 104 and/or the transceiver 106 and may be configured to implement the descriptions, functions, procedures, proposals, methods and/or operation flowcharts described in the present disclosure. For example, the processor 102 may process information within the memory 104 to generate first information/signal, and then transmit a radio signal including the first information/signal through the transceiver 106. Further, the processor 102 may receive a radio signal including second information/signal through the transceiver 106, and then store in the memory 104 information obtained from signal processing of the second information/signal. The memory 104 may be connected to the processor 102 and store various information related to an operation of the processor 102. For example, the memory 104 may store software codes including instructions for performing all or some of processes controlled by the processor 102 or performing the descriptions, functions, procedures, proposals, methods and/or operation flowcharts described in the present disclosure. The processor 102 and the memory 104 may be a part of a communication modem/circuit/chip designed to implement the wireless communication technology (e.g., LTE and NR). The transceiver 106 may be connected to the processor 102 and may transmit and/or receive the radio signals via one or more antennas 108. The transceiver 106 may include a transmitter and/or a receiver. The transceiver 106 may be used interchangeably with a radio frequency (RF) unit. In various embodiments of the present disclosure, the wireless device may mean the communication modem/circuit/chip.

The second wireless device 200 may include one or more processors 202 and one or more memories 204 and may further include one or more transceivers 206 and/or one or more antennas 208. The processor 202 may control the memory 204 and/or the transceiver 206 and may be configured to implement the descriptions, functions, procedures, proposals, methods and/or operation flowcharts described in the present disclosure. For example, the processor 202 may process information within the memory 204 to generate third information/signal and then transmit a radio signal including the third information/signal through the transceiver 206. Further, the processor 202 may receive a radio signal including fourth information/signal through the transceiver 206 and then store in the memory 204 information obtained from signal processing of the fourth information/signal. The memory 204 may be connected to the processor 202 and store various information related to an operation of the processor 202. For example, the memory 204 may store software codes including instructions for performing all or some of processes controlled by the processor 202 or performing the descriptions, functions, procedures, proposals, methods and/or operation flowcharts described in the present disclosure. The processor 202 and the memory 204 may be a part of a communication modem/circuit/chip designated to implement the wireless communication technology (e.g., LTE and NR). The transceiver 206 may be connected to the processor 202 and may transmit and/or receive the radio signals through one or more antennas 208. The transceiver 206 may include a transmitter and/or a receiver, and the transceiver 206 may be used interchangeably with the RF unit. In various embodiments of the present disclosure, the wireless device may mean the communication modem/circuit/chip.

Hardware elements of the wireless devices 100 and 200 are described in more detail below. Although not limited thereto, one or more protocol layers may be implemented by one or more processors 102 and 202. For example, one or more processors 102 and 202 may implement one or more layers (e.g., functional layers such as PHY, MAC, RLC, PDCP, RRC, and SDAP). One or more processors 102 and 202 may generate one or more protocol data units (PDUs) and/or one or more service data units (SDUs) based on the descriptions, functions, procedures, proposals, methods and/or operation flowcharts described in the present disclosure. One or more processors 102 and 202 may generate messages, control information, data, or information based on the descriptions, functions, procedures, proposals, methods and/or operation flowcharts described in the present disclosure. One or more processors 102 and 202 may generate a signal (e.g., a baseband signal) including the PDU, the SDU, the messages, the control information, the data, or the information based on the functions, procedures, proposals and/or methods described in the present disclosure, and provide the generated signal to one or more transceivers 106 and 206. One or more processors 102 and 202 may receive the signal (e.g., baseband signal) from one or more transceivers 106 and 206 and acquire the PDU, the SDU, the messages, the control information, the data, or the information based on the descriptions, functions, procedures, proposals, methods and/or operation flowcharts described in the present disclosure.

One or more processors 102 and 202 may be referred to as a controller, a microcontroller, a microprocessor, or a microcomputer. One or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in one or more processors 102 and 202. The descriptions, functions, procedures, proposals, methods and/or operation flowcharts described in the present disclosure may be implemented using firmware or software, and the firmware or software may be implemented to include modules, procedures, functions, and the like. Firmware or software configured to perform the descriptions, functions, procedures, proposals, methods and/or operation flowcharts described in the present disclosure may be included in one or more processors 102 and 202 or stored in one or more memories 104 and 204 and may be executed by one or more processors 102 and 202. The descriptions, functions, procedures, proposals, methods and/or operation flowcharts described in the present disclosure may be implemented using firmware or software in the form of codes, instructions and/or a set form of instructions.

The one or more memories 104 and 204 may be connected to the one or more processors 102 and 202 and store various types of data, signals, messages, information, programs, codes, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located inside and/or outside the one or more processors 102 and 202. The one or more memories 104 and 204 may be connected to the one or more processors 102 and 202 through various technologies such as wired or wireless connection.

The one or more transceivers 106 and 206 may transmit, to one or more other devices, user data, control information, radio signals/channels, etc. mentioned in the methods and/or operation flowcharts of the present disclosure. The one or more transceivers 106 and 206 may receive, from the one or more other devices, the user data, control information, radio signals/channels, etc. mentioned in the descriptions, functions, procedures, proposals, methods and/or operation flowcharts described in the present disclosure. For example, the one or more transceivers 106 and 206 may be connected to the one or more processors 102 and 202 and transmit and receive radio signals. For example, the one or more processors 102 and 202 may control the one or more transceivers 106 and 206 to transmit the user data, control information, or radio signals to the one or more other devices. The one or more processors 102 and 202 may control the one or more transceivers 106 and 206 to receive the user data, control information, or radio signals from the one or more other devices. The one or more transceivers 106 and 206 may be connected to the one or more antennas 108 and 208, and the one or more transceivers 106 and 206 may be configured to transmit and receive over the one or more antennas 108 and 208 the user data, control information, radio signals/channels, etc. mentioned in the descriptions, functions, procedures, proposals, methods and/or operation flowcharts described in the present disclosure. In the present disclosure, the one or more antennas may be a plurality of physical antennas or a plurality of logical antennas (e.g., antenna ports). The one or more transceivers 106 and 206 may convert the received radio signals/channels etc. from RF band signals to baseband signals in order to process the received user data, control information, radio signals/channels, etc. using the one or more processors 102 and 202. The one or more transceivers 106 and 206 may convert the user data, control information, radio signals/channels, etc. processed using the one or more processors 102 and 202 from the baseband signals to the RF band signals. To this end, the one or more transceivers 106 and 206 may include (analog) oscillators and/or filters.

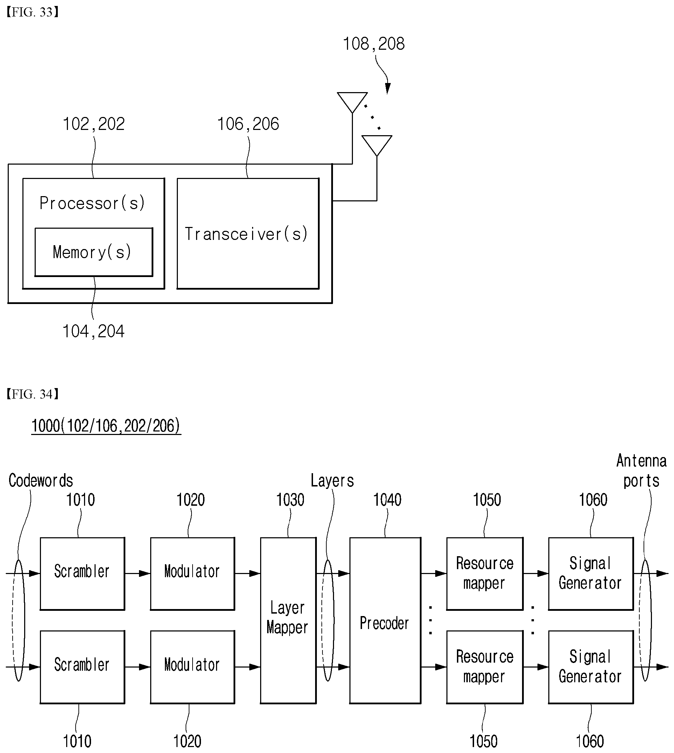

FIG. 33 illustrates another example of a wireless device applicable to various embodiments of the present disclosure.

Referring to FIG. 33, a wireless device may include at least one processor 102 and 202, at least one memory104 and 204, at least one transceiver 106 and 206, and one or more antennas 108 and 208.

The wireless device illustrated in FIG. 32 is different from the wireless device illustrated in FIG. 33 in that the processors 102 and 202 and the memories 104 and 204 are separated from each other in FIG. 32, and the processors 102 and 202 include the memories 104 and 204 in FIG. 33.

Since the detailed description for the processors 102 and 202, the memories 104 and 204, the transceivers 106 and 206, and the one or more antennas 108 and 208 is the same as that described above, repetitive descriptions are omitted to avoid unnecessary repetition of description.

Examples of a signal processing circuit to which various embodiments of the present disclosure are applied are described below.

FIG. 34 illustrates a signal processing circuit for a transmission signal.

Referring to FIG. 34, a signal processing circuit 1000 may include scramblers 1010, modulators 1020, a layer mapper 1030, a precoder 1040, resource mappers 1050, and signal generators 1060. Although not limited to this, an operation/function of FIG. 34 may be performed by the processors 102 and 202 and/or the transceivers 106 and 206 of FIG. 32. Hardware elements of FIG. 34 may be implemented by the processors 102 and 202 and/or the transceivers 106 and 206 of FIG. 32. For example, blocks 1010 to 1060 may be implemented by the processors 102 and 202 of FIG. 32. Further, the blocks 1010 to 1050 may be implemented by the processors 102 and 202 of FIG. 32, and the block 1060 may be implemented by the transceivers 106 and 206 of FIG. 32.

Codewords may be converted into radio signals via the signal processing circuit 1000 of FIG. 34. The codewords are encoded bit sequences of information blocks. The information blocks may include transport blocks (e.g., a UL-SCH transport block, a DL-SCH transport block). The radio signals may be transmitted via various physical channels (e.g., PUSCH, PDSCH, etc.).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W, where N is the number of antenna ports, and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols, and the generated radio signals may be transmitted to other devices over each antenna. To this end, the signal generators 1060 may include inverse fast Fourier transform (IFFT) modules, cyclic prefix (CP) inserters, digital-to-analog converters (DACs), and frequency up-converters.

Signal processing procedures for a received signal in the wireless device may be configured in a reverse manner of the signal processing procedures 1010 to 1060 of FIG. 34. For example, the wireless devices (e.g., 100 and 200 of FIG. 32) may receive radio signals from the exterior through the antenna ports/transceivers. The received radio signals may be converted into baseband signals through signal restorers. To this end, the signal restorers may include frequency down-converters, analog-to-digital converters (ADCs), CP remover, and fast Fourier transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

Examples of use of a wireless device to which various embodiments of the present disclosure are applied are described below.

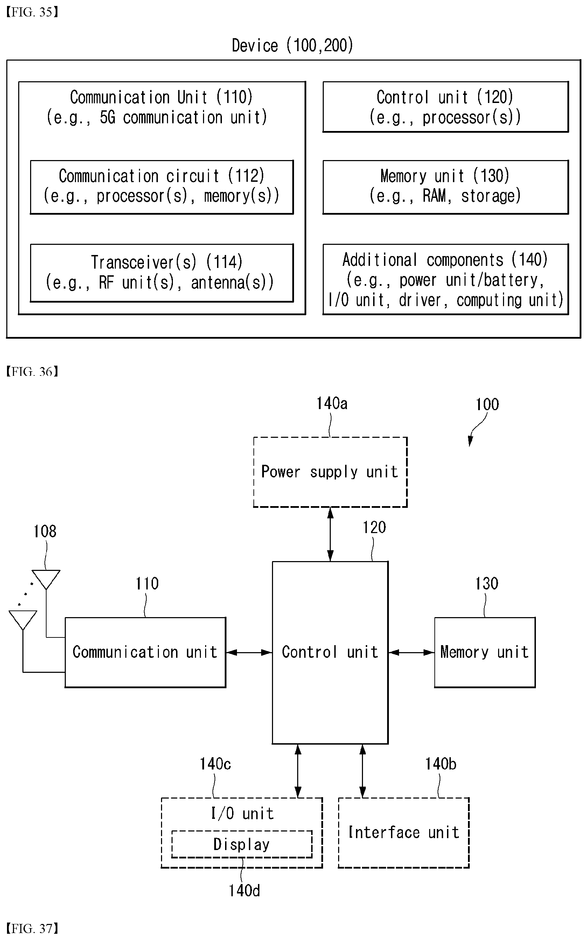

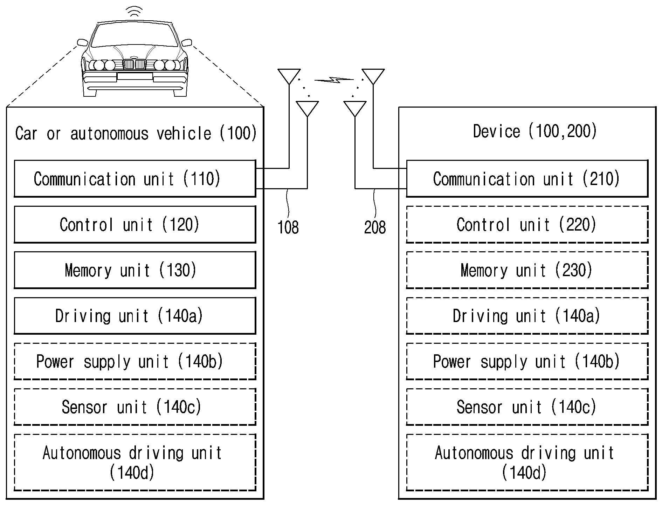

FIG. 35 illustrates another example of a wireless device applied to various embodiments of the present disclosure. The wireless device may be implemented in various forms based on use cases/services (see FIG. 31).

Referring to FIG. 35, wireless devices 100 and 200 may correspond to the wireless devices 100 and 200 of FIG. 32 and may consist of various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 32. For example, the transceiver(s) 114 may include the one or more transceivers 106 and 206 and/or the one or more antennas 108 and 208 of FIG. 32. The control unit 120 is electrically connected to the communication unit 110, the memory 130, and the additional components 140 and controls overall operation of the wireless devices. For example, the control unit 120 may control an electric/mechanical operation of the wireless device based on programs/codes/instructions/information stored in the memory unit 130. The control unit 120 may transmit the information stored in the memory unit 130 to the exterior (e.g., other communication devices) through the communication unit 110 via a wireless/wired interface or store, in the memory unit 130, information received via the wireless/wired interface from the exterior (e.g., other communication devices) through the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of the robot (100a of FIG. 31), the vehicles (100b-1 and 100b-2 of FIG. 31), the XR device (100c of FIG. 35), the hand-held device (100d of FIG. 31), the home appliance (100e of FIG. 31), the IoT device (100f of FIG. 31), a digital broadcast terminal, a hologram device, a public safety device, an MTC device, a medicine device, a fintech device (or a finance device), a security device, a climate/environment device, the AI server/device (400 of FIG. 31), the BSs (200 of FIG. 31), a network node, etc., but is not limited thereto. The wireless device may be used in a mobile or fixed place based on a use-example/service.

In FIG. 35, all the various elements, components, units/parts, and/or modules of the wireless devices 100 and 200 may be connected to each other via wired interfaces or at least a part thereof may be wirelessly connected through the communication unit 110. For example, in each of the wireless devices 100 and 200, the control unit 120 and the communication unit 110 may be connected by wire, and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may consist of a set of one or more processors. As an example, the control unit 120 may include a set of a communication control processor, an application processor, an electronic control unit (ECU), a graphical processing unit, and a memory control processor. As another example, the memory 130 may include a random access memory (RAM), a dynamic RAM (DRAM), a read only memory (ROM)), a flash memory, a volatile memory, a non-volatile memory, and/or a combination thereof.

Examples of implementation of FIG. 35 are described in more detail below.

FIG. 36 illustrates a hand-held device applied to various embodiments of the present disclosure. The hand-held device may include a smartphone, a smartpad, a wearable device (e.g., a smartwatch or a smartglasses), or a portable computer (e.g., a notebook). The mobile device may be referred to as a mobile station (MS), a user terminal (UT), a mobile subscriber station (MSS), a subscriber station (SS), an advanced mobile station (AMS), or a wireless terminal (WT).

Referring to FIG. 36, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 35, respectively.

The communication unit 110 may transmit and receive signals (e.g., data and control signals) to and from other wireless devices or BSs. The control unit 120 may perform various operations by controlling components of the hand-held device 100. The control unit 120 may include an application processor (AP). The memory unit 130 may store data/parameters/programs/codes/instructions needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, for data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

FIG. 37 illustrates a vehicle or an autonomous vehicle applied to various embodiments of the present disclosure.

The vehicle or autonomous vehicle may be implemented by a mobile robot, a car, a train, a manned/unmanned Aerial Vehicle (AV), a ship, etc.

Referring to FIG. 37, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 35, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an electronic control unit (ECU). The driving unit 140a may allow the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a so that the vehicle or the autonomous vehicle 100 moves along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transmit information on a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

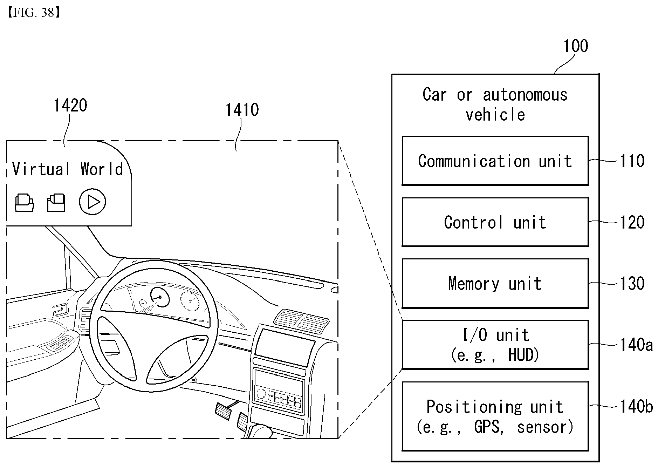

FIG. 38 illustrates a vehicle applied to various embodiments of the present disclosure. The vehicle may be implemented as a transport means, a train, an aerial vehicle, a ship, etc.

Referring to FIG. 38, a vehicle 100 may include a communication unit 110, a control unit 120, a memory unit 130, an I/O unit 140a, and a positioning unit 140b. The blocks 110 to 130/140a and 140b correspond to blocks 110 to 130/140 of FIG. 35, respectively.

The communication unit 110 may transmit and receive signals (e.g., data and control signals) to and from external devices such as other vehicles or base stations. The control unit 120 may perform various operations by controlling components of the vehicle 100. The memory unit 130 may store data/parameters/programs/codes/instructions for supporting various functions of the vehicle 100. The I/O unit 140a may output an AR/VR object based on information within the memory unit 130. The I/O unit 140a may include an HUD. The positioning unit 140b may acquire location information of the vehicle 100. The location information may include absolute location information of the vehicle 100, location information of the vehicle 100 within a traveling lane, acceleration information, and location information of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain vehicle location information through the GPS and the various sensors and store the obtained information in the memory unit 130. The control unit 120 may generate a virtual object based on the map information, the traffic information, and the vehicle location information, and the I/O unit 140a may display the generated virtual object on a window in the vehicle (1410 and 1420). The control unit 120 may determine whether the vehicle 100 normally drives within a traveling lane, based on the vehicle location information. If the vehicle 100 abnormally exits from the traveling lane, the control unit 120 may display a warning on the window in the vehicle through the I/O unit 140a. In addition, the control unit 120 may broadcast a warning message about driving abnormity to neighboring vehicles through the communication unit 110. According to situations, the control unit 120 may transmit the location information of the vehicle and the information about driving/vehicle abnormality to related organizations through the communication unit 110.

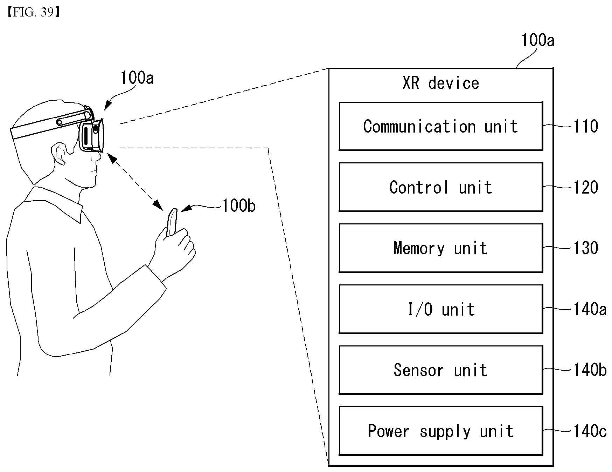

FIG. 39 illustrates an XR device applied to various embodiments of the present disclosure. The XR device may be implemented as an HMD, a head-up display (HUD) mounted in a vehicle, a television, a smartphone, a computer, a wearable device, a home appliance, a digital signage, a vehicle, a robot, etc.

Referring to FIG. 39, an XR device 100a may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 35, respectively.

The communication unit 110 may transmit and receive signals (e.g., media data, control signal, etc.) to and from external devices such as other wireless devices, handheld devices, or media servers. The media data may include video, images, sound, etc. The control unit 120 may control components of the XR device 100a to perform various operations. For example, the control unit 120 may be configured to control and/or perform procedures such as video/image acquisition, (video/image) encoding, and metadata generation and processing. The memory unit 120 may store data/parameters/programs/codes/instructions required to drive the XR device 100a/generate an XR object. The I/O unit 140a may obtain control information, data, etc. from the outside and output the generated XR object. The I/O unit 140a may include a camera, a microphone, a user input unit, a display, a speaker, and/or a haptic module. The sensor unit 140b may obtain a state, surrounding environment information, user information, etc. of the XR device 100a. The sensor 140b may include a proximity sensor, an illumination sensor, an acceleration sensor, a magnetic sensor, a gyro sensor, an inertial sensor, an RGB sensor, an IR sensor, a fingerprint scan sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) required to generate the XR object (e.g., an AR/VR/MR object). The I/O unit 140a may obtain instructions for manipulating the XR device 100a from a user, and the control unit 120 may drive the XR device 100a based on a driving instruction of the user. For example, if the user desires to watch a film, news, etc. through the XR device 100a, the control unit 120 may transmit content request information to another device (e.g., a handheld device 100b) or a media server through the communication unit 110. The communication unit 110 may download/stream content such as films and news from another device (e.g., the handheld device 100b) or the media server to the memory unit 130. The control unit 120 may control and/or perform procedures, such as video/image acquisition, (video/image) encoding, and metadata generation/processing, for the content and generate/output the XR object based on information about a surrounding space or a real object obtained through the I/O unit 140a/sensor unit 140b.

The XR device 100a may be wirelessly connected to the handheld device 100b through the communication unit 110, and the operation of the XR device 100a may be controlled by the handheld device 100b. For example, the handheld device 100b may operate as a controller of the XR device 100a. To this end, the XR device 100a may obtain 3D location information of the handheld device 100b and generate and output an XR object corresponding to the handheld device 100b.

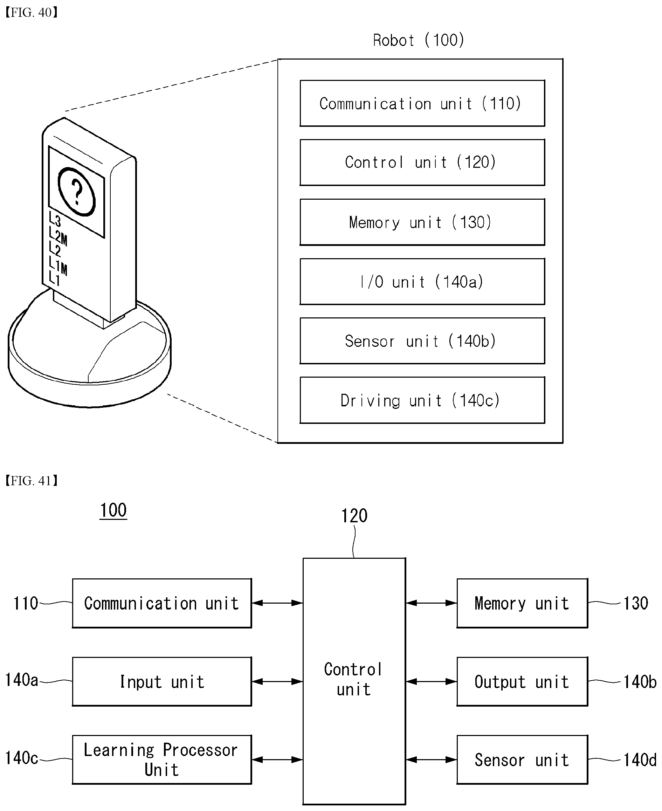

FIG. 40 illustrates a robot applied to various embodiments of the present disclosure. The robot may be categorized into an industrial robot, a medical robot, a household robot, a military robot, etc., based on a used purpose or field.

Referring to FIG. 40, a robot 100 may include a communication unit 110, a control unit 120, a memory unit 130, an I/O unit 140a, a sensor unit 140b, and a power supply unit 140c. The blocks 110 to 130/140a to 140c correspond to the blocks 110 to 130/140 of FIG. 35, respectively.

The communication unit 110 may transmit and receive signals (e.g., driving information and control signals) to and from external devices such as other wireless devices, other robots, or control servers. The control unit 120 may perform various operations by controlling components of the robot 100. The memory unit 130 may store data/parameters/programs/codes/instructions for supporting various functions of the robot 100. The I/O unit 140a may obtain information from the outside of the robot 100 and output information to the outside of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may allow the robot 100 to travel on the road or to fly. The driving unit 140c may include an actuator, a motor, a wheel, a brake, a propeller, etc.

FIG. 41 illustrates an AI device applied to various embodiments of the present disclosure.

The AI device may be implemented as a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 41, an AI device 100 may include a communication unit 110, a control unit 120, a memory unit 130, an input unit 140a, an out unit 140b, a learning processor unit 140c, and a sensor unit 140d. The blocks 110 to 130/140a to 140d correspond to the blocks 110 to 130/140 of FIG. 35, respectively.

The communication unit 110 may transmit and receive wired/radio signals (e.g., sensor information, user input, learning models, or control signals) to and from external devices such as other AI devices (e.g., 100x, 200, or 400 of FIG. 31) or an AI server 200 using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling components of the AI device 100. For example, the control unit 120 may request, search, receive, or use data of the learning processor unit 140c or the memory unit 130 and control the components of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 31). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 31). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a second node in a communication system, the method comprising:
receiving, from a first node, a second quantum signature based on a first quantum message and the first quantum message, wherein signature information related to the first quantum message is divided into a first quantum signature and the second quantum signature, and the first quantum signature is transmitted from the first node to a third node;
transmitting, to the third node, a first message encrypted based on the second quantum signature and the first quantum message using a secret symmetric key shared with the third node;
receiving, from the third node, a second message based on the first quantum signature, the second quantum signature, and the first quantum message; and
determining whether the first quantum message is forged based on the second message.

2. The method of claim 1, wherein the first quantum signature is related to a Bell state measurement result for the first quantum message, and
wherein the first quantum signature is transmitted directly from the first node to the third node without passing through the second node.

3. The method of claim 2, wherein the second message is based on a Bell state measurement result decrypted based on a first symmetric key from the first quantum signature, a transformed quantum state decrypted based on a second symmetric key from the second quantum signature, and a correlation of the Bell state measurement result.

4. The method of claim 1, wherein the second quantum signature is related to a quantum state transformed based on a quantum one-time pad algorithm for the first quantum message.

5. The method of claim 1, further comprising:
based on it being determined that the first quantum signature or the second quantum signature is forged based on the second message, discarding the first quantum message based on forgery of the first quantum message.

6. The method of claim 5, further comprising:
based on it being determined that the first quantum signature or the second quantum signature is not forged based on the second message, determining whether the first quantum message is forged based on whether the first quantum message matches a second quantum message decrypted from the second message.

7. The method of claim 6, wherein the second quantum message is based on a Bell state of the third node estimated based on the correlation of the Bell state measurement result.

8. A method of operating a third node in a communication system, the method comprising:
receiving, from a first node, a first quantum signature based on a quantum message, wherein signature information related to the quantum message is divided into the first quantum signature and a second quantum signature, and the second quantum signature is transmitted from the first node to a second node;
receiving, from the second node, a first message encrypted based on the second quantum signature and a first quantum message using a secret symmetric key shared with the second node; and
transmitting, to the second node, a second message based on the first quantum signature, the second quantum signature, and the first quantum message,
wherein based on the second message, it is determined whether the first quantum message is forged.

9. The method of claim 8, wherein the first quantum signature is related to a Bell state measurement result for the quantum message, and
wherein the first quantum signature is transmitted directly from the first node to the third node without passing through the second node.

10. The method of claim 9, wherein the second message is based on a Bell state measurement result decrypted based on a first symmetric key from the first quantum signature, a transformed quantum state decrypted based on a second symmetric key from the second quantum signature, and a correlation of the Bell state measurement result.

11. The method of claim 8, wherein the second quantum signature is related to a quantum state transformed based on a quantum one-time pad algorithm for the quantum message.

12. The method of claim 8, wherein based on it being determined that the first quantum signature or the second quantum signature is forged based on the second message, the first quantum message is discarded based on forgery of the first quantum message.

13. The method of claim 12, wherein based on it being determined that the first quantum signature or the second quantum signature is not forged based on the second message, whether the first quantum message is forged is determined based on whether the first quantum message matches a second quantum message decrypted from the second message.

14. The method of claim 13, wherein the second quantum message is based on a Bell state of the third node estimated based on the correlation of the Bell state measurement result.

15. A second node in a communication system, the second node comprising:
a transceiver;
at least one processor; and
at least one memory operably connectable to the at least one processor and storing instructions performing operations based on being executed by the at least one processor,
wherein the operations comprise all steps of a method according to any one of claims 1 to 7.

16. A third node in a communication system, the third node comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a second node in a communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a third node in a communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
